# EUROPÄISCHE PATENTSCHRIFT

(11) **EP 1 288 219 B1**
(45) Veröffentlichungstag und Bekanntmachung des Hinweises auf die Patenterteilung: **20.04.2005**
(21) Anmeldenummer: 02026562.5
(22) Anmeldetag: 01.08.2000
(51) Int. Cl.: C07F 17/00, C08F 10/02, C08F 10/00, C08F 4/60, B01J 31/22

(54) **Monocyclopentadienylkomplexe von Chrom, Molybdän oder Wolfram mit einer Donorbrücke**
Monocyclopentadienyl complexes of chromium, molybdenum or tungsten with a donor bridge
Complexes monocyclopentadiényles de chrome, de molybdène ou de tungstène comportant un pont donneur

(30) Priorität: 13.08.1999 US 373715
(43) Veröffentlichungstag der Anmeldung: 05.03.2003
(62) Teilanmeldung aus: 00953135.1
(73) Patentinhaber: Basell Polyolefine GmbH, 50389 Wesseling (DE)
(72) Erfinder: Mihan, Sharam, 67061 Ludwigshafen (DE); Lilge, Dieter, 67117 Limburgerhof (DE); De Lange, Paulus, 50389 Wesseling (DE); Schweier, Günther, 67159 Friedelsheim (DE); Schneider, Martin, 67065 Ludwigshafen (DE); Rief, Ursula, 68542 Heddesheim (DE); Handrich, Udo, 67454 Hassloch (DE); Hack, Johannes, 67269 Grünstadt (DE); Enders, Markus, 69123 Heidelberg (DE); Ludwig, Gunter, 74889 Steinsfurt (DE); Rudolph, Ralph, 68549 Ilvesheim (DE)
(74) Vertreter: Meyer, Thomas Hans

(56) Entgegenhaltungen:
- EP-A- 0 742 046
- MISE, TAKAYA ET AL: "Preparation and structure of the first ansa-molybdenocene and tungstenocene derivatives. Reaction of [O(SiMe2C5H4)2]MoH2 with methyl methacrylate to probe the olefin attacking site" J. ORGANOMET. CHEM., Bd. 473, Nr. 1-2, 1994, Seiten 155-162, XP002150579
- DOEHRING, A. ET AL: "Donor-Ligand-Substituted Cyclopentadienylchromium(III) Complexes: A New Class of Alkene Polymerization Catalyst. 1. Amino-Substituted Systems" ORGANOMETALLICS, Bd. 19, Nr. 4, 2000, Seiten 388-402, XP002150580

## Beschreibung

Gegenstand der vorliegenden Erfindung sind substituierte Monocyclopentadienyl-, Monoindenyl-, Monofluorenyl- oder Heterocyclopentadienylkomplexe von Chrom, Molybdän oder Wolfram, wobei mindestens einer der Substituenten am Cyclopentadienylring eine rigide, nicht nur ausschließlich über sp³ hybridisierte Kohlenstoffoder Silizium-Atome gebundene, Donorfunktion trägt, sowie ein Verfahren zur Polymerisation von Olefinen.

Viele der Katalysatoren, die zur Polymerisation von α-Olefinen eingesetzt werden, basieren auf immobilisierten Chromoxiden (siehe z. B. Kirk-Othmer, "Encyclopedia of Chemical Technology", 1981, Vol.16, S. 402). Diese ergeben i. a. Ethylenhomo- und Copolymere mit hohen Molekulargewichten, sind jedoch relativ unempfindlich gegenüber Wasserstoff und erlauben somit keine einfache Kontrolle des Molekulargewichts. Demgegenüber läßt sich durch Verwendung von Bis(cyclopentadienyl)- (US 3,709,853), Bis(indenyl)- oder Bis (fluorenyl)chrom (US 4,015,059), das auf einem anorganischen, oxidischen Träger aufgebracht ist, das Molekulargewicht von Polyethylen durch Zugabe von Wasserstoff einfach steuern.

Wie bei den Ziegler-Natta-Systemen, ist man auch bei den Chromverbindungen seit kurzem auf der Suche nach Katalysatorsystemen mit einem einheitlich definierten, aktiven Zentrum, sogenannten Single-Site-Katalysatoren. Durch gezielte Variation des Ligandgerüstes sollen Aktivität, Copolymerisationsverhalten des Katalysators und die Eigenschaften der so erhaltenen Polymeren einfach verändert werden können.

So werden in EP-A-742046 die sogenannten constrained geometry Komplexe der 6. Nebengruppe, ein spezielles Verfahren zu ihrer Darstellung (via Metalltetraamiden), sowie ein Verfahren zur Herstellung eines Polyolefins in Anwesenheit solcher Katalysatoren offenbart. Das Ligandgerüst besteht aus einem anionischen Donor, der mit einen Cyclopentadienylrest verknüpft ist.

Von K. H. Theopold et al. wird in Organomet. 1996, 15, 5284-5286, ein analoger {[(Tert.Butylamido)dimethylsilyl)(tetramethylcyclopentadienyl)}chromchlorid Komplex für die Polymerisation von Olefinen beschrieben. Dieser Komplex polymerisiert selektiv Ethylen. Weder Comonomere, wie z.B. Hexen werden eingebaut, noch kann Propen polymerisiert werden.

Dieser Nachteil kann durch Verwendung von strukturell sehr ähnlichen Systemen überwunden werden. So beschreibt DE-A1-19710615 Donorligand-substituierte Monocyclopentadienylchrom-Verbindungen mit denen z.B. auch Propen polymerisiert werden kann. Der Donor ist hierin aus der 15. Gruppe des Periodensystems und neutral. Der Donor ist über ein (ZR₂)ₙ-Fragment an den Cyclopentadienylring gebunden, wobei R ein Wasserstoff, Alkyl oder Aryl, Z ein Atom der 14. Gruppe des Periodensystems und n=1 ist. In DE-A1-19630580 wird ausgeführt, daß die Kombination Z=Kohlenstoff mit einem Amindonor gute Ergebnisse liefert.

In WO-A-96/13529 werden reduzierte Übergangsmetallkomplexe der Gruppen 4 bis 6 des Periodensystems mit mehrzähnigen monoanionischen Liganden beschrieben. Hierzu gehören u.a. Cyclopentadienylliganden, die bevorzugt eine, über eine (CR₂)ₚ Brücke mit R gleich Wasserstoff oder ein Hydrocarbyl-Radikal mit 1 bis 20 Kohlenstoffatomen und p gleich 1 bis 4, gebundene Donorfunktion enthalten. Als Übergangsmetall ist Titan bevorzugt.

Es gibt auch Ligandsysteme, in denen die Donorgruppe rigide mit dem Cyclopentadienylrest verknüpft ist. Solche Ligandsysteme und deren Metallkomplexe werden z.B. von P. Jutzi und U. Siemeling in J. Orgmet. Chem. (1995), 500, 175-185, Abschnitt 3 zusammengefaßt. M. Enders et. al. beschreiben in Chem. Ber. (1996), 129, 459-463 8-Quinolyl-substitierte Cyclopentadienylliganden und deren Titan- und Zirkontrichlorid Komplexe. 2-Picolyl-cyclopentadienyltitantrichlorid in Kombination mit Methylaluminoxan wurde von M. Blais, J. Chien und M. Rausch in Organomet. (1998), 17 (17) 3775-3783 zur Polymerisation von Olefinen eingesetzt.

Aufgabe der vorliegenden Erfindung bestand nun darin neue Katalysatorsysteme zu finden, die sich einfach modifizieren lassen und zur Polymerisation von α-Olefinen geeignet sind.

Demgemäß wurde ein Verfahren zur Polymerisation oder Copolymerisation von Olefinen gefunden, in dem man Olefine in Anwesenheit von folgenden Komponenten polymerisiert:
(A) Substituierte Monocyclopentadienyl-, Monoindenyl-, Monofluorenyl- oder Heterocyclopentadienylkomplexe nach Anspruch 1, der allgemeinen Formel I 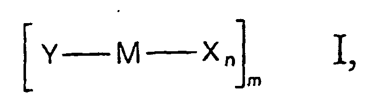 worin die Variablen folgende Bedeutung besitzen:
   - M: Chrom, Molybdän oder Wolfram
   - Y: durch folgende allgemeine Formel II 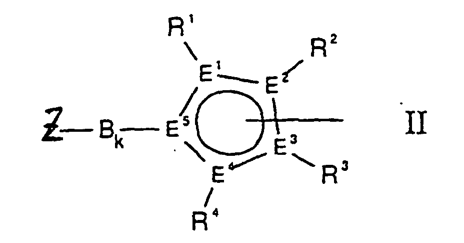 beschrieben ist, worin die variablen folgende Bedeutung besitzen:
   E¹-E⁵ Kohlenstoff oder maximal ein E¹ bis E⁵ Phosphor oder Stickstoff,
   Z 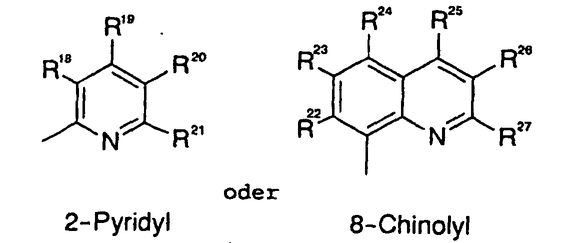
   B eine der folgenden Gruppen: 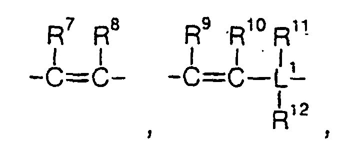 und zusätzlich, falls Z ein unsubstituiertes, substituiertes oder kondensiertes, partiell ungesättigtes heterocyclisches oder heteroaromatisches Ringsystem ist, auch 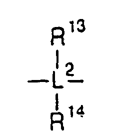 sein kann, wobei
   L¹,L² Silizium oder Kohlenstoff bedeutet,
   k 1, wenn Z ein unsubstituiertes, substituiertes oder kondensiertes, partiell ungesättigtes heterocyclisches oder heteroaromatisches Ringsystem ist auch 0,
   X unabhängig voneinander Fluor, Chlor, Brom, Jod, Wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR¹⁵R¹⁶, OR¹⁵, SR¹⁵, SO₃R¹⁵, OC(O)R¹⁵, CN, SCN, β-Diketonat, CO, BF₄-, PF₆-, oder sperrige nichtkoordinierende Anionen,
   R¹-R¹⁶ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR¹⁷₃, wobei die organischen Reste R¹-R¹⁶ auch durch Halogene substituiert sein können und je zwei geminale oder vicinale Reste R¹-R¹⁶ auch zu einem fünf- oder sechsgliedrigen Ring verbunden sein können,
   R¹⁷ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei geminale Reste R¹⁷ auch zu einem fünf- oder sechsgliedrigen Ring verbunden sein können,
   R¹⁸-R²⁷ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR¹⁷₃, Halogen , wobei die organischen Reste R¹⁸-R²⁷ auch durch Halogene substituiert sein können und je zwei vicinale Reste R¹⁸-R²⁷ auch zu einem fünf- oder sechsgliedrigen Ring verbunden sein können,
   n 1, 2 oder 3,
   m 1, 2 oder 3,
(B) optional einer oder mehreren Aktivatorverbindungen, und
(C) optional einem oder mehreren zusätzlichen für die Polymerisation von Olefinen üblichen Katalysatoren.

Desweiteren würden substituierte Monocyclopentadienyl-, Monoindenyl-, Monofluorenyl- oder Heterocyclopentadienylkomplexe der allgemeinen Formel I 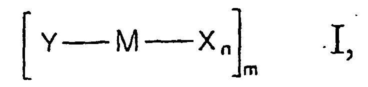 gefünden, worin die Variablen folgende Bedeutung besitzen:
- M: Chrom, Molybdän oder Wolfram
- Y: durch folgende allgemeine Formel II 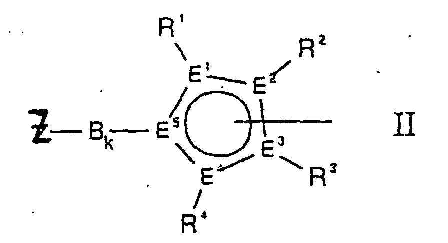 beschrieben ist, worin die Variablen folgende Bedeutung besitzen:
- E¹-E⁵: Kohlenstoff oder maximal ein E¹ bis E⁵ Phosphor oder Stickstoff,
- Z: 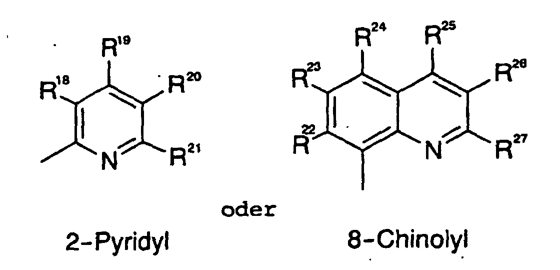
- B: eine der folgenden Gruppen: 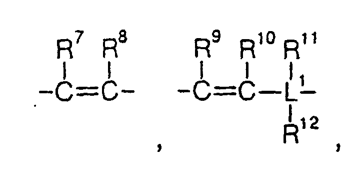 und zusätzlich, falls Z ein unsubstituiertes, substituiertes oder kondensiertes, partiell ungesättigtes heterocyclisches oder heteroaromatisches Ringsystem ist, auch 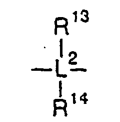 sein kann, wobei
L¹,L² Silizium oder Kohlenstoff bedeutet,
k 1, wenn Z ein unsubstituiertes, substituiertes oder kondensiertes, partiell ungesättigtes heterocyclisches oder heteroaromatisches Ringsystem ist auch 0,
X unabhängig voneinander Fluor, Chlor, Brom, Jod, Wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR¹⁵R¹⁶, OR¹⁵, SR¹⁵, SO₃R¹⁵, OC(O)R¹⁵, CN, SCN, β-Diketonat, CO, BF₄-, PF₆-, oder sperrige nichtkoordinierende Anionen,
R¹-R¹⁶ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR¹⁷₃, wobei die organischen Reste R¹-R¹⁶ auch durch Halogene substituiert sein können und je zwei geminale oder vicinale Reste R¹-R¹⁶ auch zu einem fünf- oder sechsgliedrigen Ring verbunden sein können,
R¹⁷ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei geminale Reste R¹⁷ auch zu einem fünf- oder sechsgliedrigen Ring verbunden sein können,
R¹⁸-R²⁷ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR¹⁷₃, Halogen, wobei die organischen Reste R¹⁸-R²⁷ auch durch Halogene substituiert sein können und je zwei vicinale Reste R¹⁸-R²⁷ auch zu einem fünf- oder sechsgliedrigen Ring verbunden sein können,
n 1, 2 oder 3,
m 1, 2 oder 3.

Als Übergangsmetall M kommt insbesondere Chrom in Betracht.

Y ist ein substituiertes Cyclopentadienylsystem, wobei der Rest -Bₖ-Z eine rigide gebundene Donorfunktion trägt. Der Cyclopentadienylring ist über eine η⁵-Bindung an das Übergangsmetall gebunden. Der Donor kann koordinativ gebunden oder nicht koordiniert sein. Bevorzugt ist der Donor intramolekular an das Metallzentrum koordiniert.

E¹ bis E⁵ sind bevorzugt vier Kohlenstoffatome und ein Phosphoratom oder nur Kohlenstoffatome und ganz besonders bevorzugt sind alle E¹ bis E⁵ gleich Kohlenstoff.

Hierbei sind einfache Systeme Z bevorzugt, die leicht zugänglich und billig sind und aus der folgenden Gruppe ausgewählt sind:

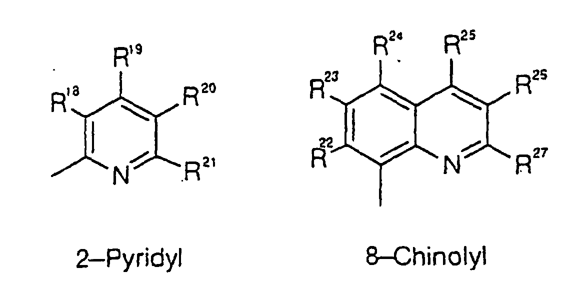

Durch geeignete Wahl der Reste R¹⁸ bis R²⁷ kann Einfluß auf die Aktivität des Katalysators und das Molekulargewicht des entstehenden Polymeren genommen werden. Als Substituenten R¹⁸ bis R²⁷ kommen die gleichen Reste, wie für R¹-R¹⁶ beschrieben und Halogene, wie z.B. Fluor, Chlor oder Brom in Betracht, wobei gegebenenfalls auch zwei vicinale Reste R¹⁸ bis R²⁷ zu einem 5- oder 6-gliedrigen Ring verbunden sein können und auch durch Halogene, wie Fluor, Chlor oder Brom substituiert sein können. Bevorzugte Reste R¹⁸ bis R²⁷ sind Wasserstoff, Methyl, Ethyl, n-Propyl, n-Butyl, tert.-Butyl, n-Pentyl, n-Hexyl, n-Heptyl, n-Octyl, Vinyl, Allyl, Benzyl, Phenyl, Naphthyl, Biphenyl und Anthranyl, sowie Fluor, Chlor und Brom. Als Si-organische Substituenten kommen besonders Trialkylsilyl-Gruppen mit 1 bis 10 C-Atomen im Alkylrest in Betracht, insbesondere Trimethylsilyl-Gruppen. Ganz besonders bevorzugt ist Z ein unsubstituiertes oder substituiertes, z.B. alkylsubstituiertes, insbesondere in Position 8 verknüpftes Chinolyl, z.B. 8-Chinolyl, 8-(2-Methylchinolyl), 8-(2,3,4-Trimethylchinolyl), 8-(2,3,4,5,6,7-Hexamethylchinolyl. Es ist sehr einfach darstellbar und liefert gleichzeitig sehr gute Aktivitäten.

Die rigide Verbrückung B zwischen dem Cyclopentadienylring und der funktionellen Gruppe Z ist ein organisches Diradikal, bestehend aus Kohlenstoff und/oder Silizium Einheiten mit einer Kettenlänge von 1 bis 3. Durch eine Änderung der Verknüpfungslänge zwischen Cyclopentadienylring und Heteroatom-Donor kann die Aktivität des Katalysators beeinflußt werden. Da auch die Art von Z die Anzahl der verbrückenden Atome zwischen dem Cyclopentadienylrest und dem Heteroatom beeinflußt, können hier vielfältige Kombinationen von B mit Z zur Einflußnahme gewählt werden. B kann mit L¹ oder mit CR⁹ an Z gebunden sein. Bevorzugt wegen der einfachen Darstellbarkeit ist die Kombination von B gleich CH₂, C(CH₃)₂ oder Si(CH₃)₂ und Z gleich unsubstituiertes oder substituiertes 8-Chinolyl oder unsubstituiertes oder substituiertes 2-Pyridyl. Ganz besonders einfach zugänglich sind auch Systeme ohne Brücke B, bei denen k gleich 0 ist. Bevorzugtes Z ist in diesem Falle unsubstituiertes oder substituiertes Chinolyl, insbesondere 8-Chinolyl.

Auch durch die Variation der Substituenten R¹-R¹⁶ lassen sich verschiedene Eigenschaften des Katalysatorsystems verändern. Durch die Zahl und Art der Substituenten, insbesondere von R¹-R⁴ kann die Zugänglichkeit des Metallatoms M für die zu polymerisierenden Olefine beeinflußt werden. So ist es möglich die Aktivität und Selektivität des Katalysators hinsichtlich verschiedener Monomerer, insbesondere sterisch anspruchsvoller Monomerer, zu modifizieren. Da die Substituenten auch auf die Geschwindigkeit von Abbruchreaktionen der wachsenden Polymerkette Einfluß nehmen können, läßt sich hierdurch auch das Molekulargewicht der entstehenden Polymere verändern. Die chemische Struktur der Substituenten R¹ bis R¹⁶ kann daher in weiten Bereichen variiert werden, um die gewünschten Ergebnisse zu erzielen und ein maßgeschneidertes Katalysatorsystem zu erhalten. Als C-organische Substituenten R¹-R¹⁶ kommen beispielsweise folgende in Betracht: C₁-C₂₀-Alkyl, wobei das Alkyl linear oder verzweigt sein kann, wie z.B. Methyl, Ethyl, n-Propyl, iso-Propyl, n-Butyl, iso-Butyl, tert.-Butyl, n-Pentyl, n-Hexyl, n-Heptyl, n-Octyl, n-Nonyl, n-Decyl oder n-Dodecyl, 5- bis 7-gliedriges Cycloalkyl, das seinerseits eine C₆-C₁₀-Arylgruppe als Substituent tragen kann, wie z.B. Cyclopropan, Cyclobutan, Cyclopentan, Cyclohexan, Cycloheptan, Cyclooctan, Cyclononan oder Cyclododekan, C₂-C₂₀-Alkenyl, wobei das Alkenyl linear, cyclisch oder verzweigt sein kann und die Doppelbindung intern oder endständig sein kann, wie z.B. Vinyl, 1-Allyl, 2-Allyl, 3-Allyl, Butenyl, Pentenyl, Hexenyl, Cyclopentenyl, Cyclohexenyl, Cyclooctenyl oder Cyclooktadienyl, C₆-C₂₀-Aryl, wobei der Arylrest durch weitere Alkylgruppen substituiert sein kann, wie z.B. Phenyl, Naphthyl, Biphenyl, Anthranyl, o-, m-, p-Methylphenyl, 2,3-, 2,4-, 2,5-, oder 2,6-Dimethylphenyl, 2,3,4-, 2,3,5-, 2,3,6-, 2,4,5-, 2,4,6- oder 3,4,5-Trimethylphenyl, oder Arylalkyl, wobei das Arylalkyl durch weitere Alkylgruppen substituiert sein kann, wie z.B. Benzyl, o-, m-, p-Methylbenzyl, 1- oder 2-Ethylphenyl, wobei gegebenenfalls auch zwei R¹ bis R¹⁶ zu einem 5- oder 6-gliedrigen Ring verbunden sein können und die organischen Reste R¹-R¹⁶ auch durch Halogene, wie z.B. Fluor, Chlor oder Brom substituiert sein können. Als Si-organische Substituenten SiR¹⁷₃ kommen für R¹⁷ die gleichen Reste, wie oben für R¹-R¹⁶ näher ausgeführt, wobei gegebenenfalls auch zwei R¹⁷ zu einem 5- oder 6-gliedrigen Ring verbunden sein können, in Betracht, wie z.B. Trimethylsilyl, Triethylsilyl, Butyldimethylsilyl, Tributylsilyl, Triallylsilyl, Triphenylsilyl oder Dimethylphenylsilyl. Bevorzugt Reste R⁵-R¹⁶ sind Wasserstoff, Methyl, Ethyl, n-Propyl, iso-Propyl, n-Butyl, iso-Butyl, tert.-Butyl, n-Pentyl, n-Hexyl, n-Heptyl, n-Octyl, Vinyl, Allyl, Benzyl, Phenyl, ortho Dialkyl- oder Dichlorosubstituierte Phenyle, Trialkyl- oder Trichlorosubstituierte Phenyle, Naphthyl, Biphenyl und Anthranyl. Als Si-organische Substituenten kommen besonders Trialkylsilyl-Gruppen mit 1 bis 10 C-Atomen im Alkylrest in Betracht, insbesondere Trimethylsilyl-Gruppen. Besonders bevorzugte Reste R⁵ und R⁶ sind Methyl, Ethyl, n-Propyl, iso-Propyl, n-Butyl, iso-Butyl, tert.-Butyl, n-Pentyl, n-Hexyl, n-Hep-. tyl, n-Octyl, Allyl, Benzyl, Phenyl oder Trialkylsilyl-Gruppen. Bevorzugt sind R¹ bis R⁴ Wasserstoff, Methyl, Ethyl, n-Propyl, iso-Propyl, n-Butyl, iso-Butyl, tert.-Butyl, n-Pentyl, n-Hexyl, n-Heptyl, n-Octyl, Benzyl oder Phenyl. In bevorzugten Übergangsmetallkomplexen ist E¹E²E³E⁴E⁵ zusammen mit R¹R²R³R⁴ ein Mono-, wie z.B. 3-Methylcyclopentadienyl, 3-Ethylcyclopentadienyl, 3-Isopropylcyclopentadienyl, 3-tert.Butylcyclopentadienyl, Di-, wie z.B. Tetrahydroindenyl, 2,4-Dimethylcyclopentadienyl oder 3-Methyl-5-tert.Butylcyclopentadienyl, Tri-, wie z.B. 2,3,5-Trimethylcyclopentadienyl oder Tetraalkylcyclopentadienyl, wie z.B. 2,3,4,5-Tetramethylcyclopentadienyl. Des weiteren sind auch.solche Verbindungen bevorzugt in denen zwei vicinale R¹ bis R⁴ ein kondensiertes sechsgliedriges Ringsystem ausbilden, worin E¹E²E³E⁴E⁵ zusammen mit R¹R²R³R⁴ ein unsubstituiertes oder substituiertes Indenyl, wie z.B. Indenyl, 2-Methylindenyl, 2-Ethyl-Indenyl. 2-Isopropylindenyl, 3-Methylindenyl, 4-Phenylindenyl, 2-Methyl-4-phenylindenyl oder 4-Naphthylindenyl oder Benzindenylsystem, wie z.B. Benzindenyl oder 2-Methylbenzindenyl darstellt. In ganz besonders bevorzugten Übergangsmetallkomplexen ist E¹E²E³E⁴E⁵ zusammen mit R¹R²R³R⁴ ein Indenyl.

Wie auch bei den Metallocenen können die Übergangsmetallkomplexe chiral sein. So kann einerseits der Cyclopentadienylrest ein oder mehrere chirale Zentren besitzen, oder aber das Cyclopentadienylsystem selbst nur enantiotop sein, so daß erst durch dessen Bindung an das Übergangsmetall M die Chiralität induziert wird. Dies kann z.B. einfach durch zwei unterschiedliche Substituenten (der Donorsubstituent und z.B. ein Alkylrest) am Cyclopentadienylring erfolgen, um so R und S Enantiomere der Übergangsmetallkomplexe erhalten zu können (zum Formalismus der Chiralität bei Cyclopentadienylverbindungen siehe R. Halterman, Chem. Rev. 92, (1992), 965-994).

Die Substituenten X ergeben sich z.B. durch die Auswahl der entsprechenden Metallausgangsverbindungen, die zur Synthese der Metallkomplexe verwendet werden, können aber auch nachträglich noch variiert werden. Als Substituenten X kommen insbesondere die Halogene wie Fluor, Chlor, Brom oder Jod und darunter insbesondere Chlor in Betracht. Auch einfache Alkylreste, wie Methyl, Ethyl, Propyl, Butyl, Vinyl, Allyl, Phenyl oder Benzyl stellen vorteilhafte Liganden X dar. Als weitere Liganden X sollen nur exemplarisch und keineswegs abschließend Trifluoracetat, BF₄-, PF₆⁻ sowie schwach bzw. nicht koordinierende Anionen (siehe z.B. S. Strauss in Chem. Rev. 1993, 93, 927-942) wie B(C₆F₅)₄- genannt werden. Die Benennung der Liganden X als Anionen beinhaltet keine Festlegung welcher Art die Bindung zum Übergangsmetall M ist. Ist X z.B. ein nicht oder schwach koordinierendes Anion, so ist die Wechselwirkung zwischen dem Metall M und dem Liganden X eher elektrostatischer Natur. Die verschiedenen Arten von Bindungen sind dem Fachmann bekannt.

Auch Amide, Alkoholate, Sulfonate, Carboxylate und β-Diketonate sind besonders geeignet. Durch Variation der Reste R¹⁵ und R¹⁶ können z.B. physikalische Eigenschaften wie Löslichkeit fein eingestellt werden. Bevorzugt werden C₁-C₁₀-Alkyl wie Methyl, Ethyl, n-Propyl, n-Butyl, tert.-Butyl, n-Pentyl, n-Hexyl, n-Heptyl, n-Octyl, sowie Vinyl, Allyl, Benzyl und Phenyl als Reste R¹⁵ und R¹⁶ verwendet. Manche dieser substituierten Liganden X werden ganz besonders bevorzugt verwendet, da sie aus billigen und einfach zugänglichen Ausgangsstoffen erhältlich sind. So ist eine besonders bevorzugte Ausführungsform, wenn X für Dimethylamid, Methanolat, Ethanolat, Isopropanolat, Phenolat, Naphtholat, Triflat, p-Toluolsulfonat, Acetat oder Acetylacetonat steht.

Die Anzahl n der Liganden X hängt von der Oxidationsstufe des Übergangsmetalles M ab. Die Zahl n kann somit nicht allgemein angegeben werden. Die Oxidationsstufe der Übergangsmetalle M in katalytisch aktiven Komplexen, sind dem Fachmann zumeist bekannt. Chrom, Molybdän und Wolfram liegen sehr wahrscheinlich in der Oxidationsstufe +3 vor. Es können jedoch auch Komplexe eingesetzt werden, deren Oxidationsstufe nicht der des aktiven Katalysators entspricht. Solche Komplexe können dann durch geeignete Aktivatoren entsprechend reduziert oder oxidiert werden. Bevorzugt werden Chromkomplexe in der Oxidationsstufe +3 verwendet.

Der Donor Z kann an das Übergangsmetall M koordinativ gebunden sein. Dies ist inter- oder intramolekular möglich. Bevorzugt ist der Donor Z intramolekular an M koordinativ gebunden. Dies kann sich jedoch im Verlauf der Polymerisation ändern.

Der Übergangsmetallkomplex der Formel I kann als monomere, dimere oder trimere Verbindung vorliegen, wobei 1 dann 1, 2 oder 3 ist. Dabei können z.B. ein oder mehrere Liganden X zwei Metallzentren M verbrücken.

Bevorzugte Komplexe sind z.B. 1-(8-Chinolyl)-2-methyl-4-methylcyclopentadienylchrom(III)dichlorid, 1-(8-Chinolyl)-3-isopropyl-5-methylcyclopentadienylchrom(III)dichlorid, 1-(8-Chinolyl)-3-tert.butyl-5-methylcyclopentadienylchrom(III)dichlorid, 1-(8-Chinolyl)-2,3,4,5-tetramethylcyclopentadienylchrom(III)dichlorid, 1-(8-Chinolyl)tetrahydroindenylchrom(III)dichlorid, 1-(8-Chinolyl)indenylchrom(III)dichlorid, 1-(8-Chinolyl)-2-methylindenylchrom(III)dichlorid, 1-(8-Chinolyl)-2-isopropylindenylchrom(III)dichlorid, 1-(8-Chinolyl)-2-ethylindenylchrom(III)dichlorid, 1-(8-Chinolyl)-2-tert.butylindenylchrom(III)dichlorid, 1-(8-Chinolyl)benzindenylchrom(III)dichlorid, 1-(8-Chinolyl)-2-methylbenzindenylchrom(III)dichlorid, 1-(8-(2-Methylchinolyl))-2-methyl-4-methylcyclopentadienylchrom(III)dichlorid, 1-(8-(2-Methylchinolyl))-2,3,4,5-tetramethylcyclopentadienylchrom(III)dichlorid, 1-(8-(2-Methylchinolyl))tetrahydroindenylchrom(III)dichlorid, 1-(8-(2-Methylchinolyl))indenylchrom(III)dichlorid, 1-(8-(2-Methylchinolyl))-2-methylindenylchrom(III)dichlorid, 1-(8-(2-Methylchinolyl))-2-isopropylindenylchrom(III)dichlorid, 1-(8-(2-Methylchinolyl))-2-ethylindenylchrom(III)dichlorid, 1-(8-(2-Methylchinolyl))-2-tert.butylindenylchrom(III)dichlorid, 1-(8-(2-Methylchinolyl))-benzindenylchrom(III)dichlorid oder 1-(8-(2-Methylchinolyl))-2-methylbenzindenylchrom(III)dichlorid.

Die Herstellung funktioneller Cyclopentadienyl-Liganden ist seit langer Zeit bekannt. Verschiedene Synthesewege für diese Komplexliganden werden z.B. von M. Enders et. al. in Chem. Ber. (1996), 129, 459-463 oder P. Jutzi und U. Siemeling in J. Orgmet. Chem. (1995), 500, 175-185 beschrieben.

Die Metallkomplexe, insbesondere die Chromkomplexe, lassen sich auf einfache Weise erhalten, wenn man die entsprechenden Metallsalze wie z.B. Metallchloride mit dem Ligandanion umsetzt (z.B. analog zu den Beispielen in DE 197 10615).

Das erfindungsgemäße Verfahren zur Polymerisation von Olefinen läßt sich mit allen technisch bekannten Polymerisationsverfahren bei Temperaturen im Bereich von 20 bis 300°C und unter Drücken von 5 bis 4000 bar kombinieren. Die vorteilhaften Druck- und Temperaturbereiche zur Durchführung des Verfahrens hängen demgemäß stark von der Polymerisationsmethode ab. So lassen sich die erfindungsgemäß verwendeten Katalysatorsysteme in allen bekannten Polymerisationsverfahren, also beispielsweise in Hochdruck-Polymerisationsverfahren in Rohrreaktoren oder Autoklaven, in Suspensions-Polymerisationsverfahren, in Lösungs-polymerisationsverfahren oder bei der Gasphasenpolymerisation einsetzen. Bei den Hochdruck-Polymerisationsverfahren, die üblicherweise bei Drücken zwischen 1000 und 4000 bar, insbesondere zwischen 2000 und 3500 bar, durchgeführt werden, werden in der Regel auch hohe Polymerisationstemperaturen eingestellt. Vorteilhafte Temperaturbereiche für diese Hochdruck-Polymerisationsverfahren liegen zwischen 200 und 280°C, insbesondere zwischen 220 und 270°C. Bei Niederdruck-Polymerisationsverfahren wird in der Regel eine Temperatur eingestellt, die mindestens einige Grad unter der Erweichungstemperatur des Polymerisates liegt. Insbesondere werden in diesen Polymerisationsverfahren Temperaturen zwischen 50 und 180°C, vorzugsweise zwischen 70 und 120°C, eingestellt. Bei den Suspensionspolymerisationen wird üblicherweise in einem Suspensionsmittel, vorzugsweise in einem Alkan polymerisiert. Die Polymerisationstemperaturen liegen i.a. im Bereich von -20 bis 115°C, der Druck i.a. im Bereich von 1 bis 100 bar. Der Feststoffgehalt der Suspension liegt i.a. im Bereich von 10 bis 80 %. Es kann sowohl diskontinuierlich, z.B. in Rührautoklaven, als auch kontinuierlich, z.B. in Rohrreaktoren, bevorzugt in Schleifreaktoren, gearbeitet werden. Insbesondere kann nach dem Phillips-PF-Verfahren, wie in der US-A 3 242 150 und US-A 3 248 179 beschrieben, gearbeitet werden. Von den genannten Polymerisationsverfahren ist erfindungsgemäß die Gasphasenpolymerisation, insbesondere in Gasphasenwirbelschicht-Reaktoren, die Lösungspolymerisation, sowie die Suspensionspolymerisation, insbesondere in Schleifenund Rührkesselreaktoren, besonders bevorzugt. Die Gasphasenpolymerisation kann auch in der sogenannten condensed, supercondensed oder superkritischen Fahrweise durchgeführt werden. Die verschiedenen oder auch gleichen Polymerisationsverfahren können auch wahlweise miteinander in Serie geschaltet sein und so eine Polymerisationskaskade bilden. Weiterhin kann zur Regelung der Polymereigenschaften auch ein Zusatz, wie z.B. Wasserstoff in den Polymerisationsverfahren verwendet werden.

Nach dem erfindungsgemäßen Verfahren lassen sich verschiedene olefinisch ungesättigte Verbindungen polymerisieren, wobei dies auch die Copolymerisation umfaßt. Im Gegensatz zu einigen bekannten Eisen- und Cobaltkomplexen zeigen die erfindungsgemäß eingesetzten Übergangsmetallkomplexe eine gute Polymerisationsaktivität auch mit höheren α-Olefinen, so daß ihre Eignung zur Copolymerisation besonders hervorzuheben ist. Als Olefine kommen dabei neben Ethylen und α-Olefinen mit 3 bis 12 Kohlenstoffatomen, wie z.B. Propen, 1-Buten, 1-Penten, 1-Hexen, 1-Hepten, 1-Octen, 1-Nonen, 1-Decen oder 1-Dodecen auch interne Olefine und nichtkonjugierte und konjugierte Diene wie Butadien, 1,5-Hexadien oder 1,6-Heptadien, cyclische Olefine wie Cyclohexen , Cyclopenten oder Norbornen und polare Monomere wie Acrylsäureester, Acrolein, Acrylnitril, Vinylether, Allylether und Vinylacetat in Betracht. Auch vinylaromatische Verbindungen wie Styrol lassen sich nach dem erfindungsgemäßen Verfahren polymerisieren. Bevorzugt wird mindestens ein Olefin ausgewählt aus der Gruppe Ethen, Propen, 1-Buten, 1-Penten, 1-Hexen, 1-Hepten, 1-Octen und 1-Decen polymerisiert. Eine bevorzugte Ausführungsform des erfindungsgemäßen Verfahrens ist dadurch gekennzeichnet, daß man als Monomere Gemische von Ethylen mit C₃- bis C₁₂-α-Olefinen einsetzt. Anders als bei einigen Eisen- und Cobaltverbindungen können auch höhere α-Olefine mit dem erfindungsgemäßen Katalysatorsystem sehr gut polymerisiert werden. In einer weiteren bevorzugten Ausführungsform des erfindungsgemäßen Verfahrens wird ein Olefin ausgewählt aus der Gruppe Propen, 1-Buten, 1-Penten, 1-Hexen, 1-Hepten und 1-Octen polymerisiert. Insbesondere diese letztgenannten Olefinen können in verflüssigtem oder flüssigem Zustand auch das Lösungsmittel in der Polymerisation- und Copolymerisationsreaktion bilden.

Die erfindungsgemäßen Metallkomplexe sind für sich teilweise nicht oder wenig polymerisationsaktiv und werden dann mit einem Aktivator, der Komponente (B), in Kontakt gebracht um gute Polymerisationsaktivität entfalten zu können. Als Aktivatorverbindungen kommen beispielsweise solche vom Alumoxantyp in Betracht, insbesondere Methylalumoxan MAO. Alumoxane werden z.B. durch kontrollierte Addition von Wasser oder wasserhaltigen Substanzen zu Alkylaluminiumverbindungen, insbesondere Trimethylaluminium, hergestellt. Als Co-Katalysator geeignete Alumoxan-Zubereitungen sind kommerziell erhältlich. Es wird angenommen, daß es sich hierbei aus einer Mischung von cyclischen und linearen Verbindungen handelt. Die cyclischen Alumoxane können durch die Formel (R²⁸AlO)ₛ und die linearen Aluminoxane durch die Formel R²⁸(R²⁸AlO)ₛAlR²⁸₂ zusammengefaßt werden, wobei s den Oligomerisationsgrad angibt und eine Zahl von ungefähr 1 bis 50 ist. Vorteilhafte Alumoxane enthalten im wesentlichen Alumoxan- Oligomere mit einem Oligomerisationsgrad von etwa 1 bis 30 und R²⁸ ist bevorzugt ein C₁-C₆-Alkyl und besonders bevorzugt Methyl, Ethyl, Butyl oder Isobutyl.

Neben den Alumoxanen können als Aktivatorkomponenten auch solche eingesetzt werden, wie sie in der sogenannten kationischen Aktivierung der Metallocen-Komplexe Verwendung finden. Derartige Aktivatorkomponenten sind z.B. aus EP-B1-0468537 und aus EP-B1-0427697 bekannt. Insbesondere können als solche Aktivatorverbindungen (B) Borane, Boroxine oder Borate, wie z. B. Trialkylboran, Triarylboran, Trimethylboroxin, Dimethylaniliniumtetraarylborat, Trityltetraarylborat, Dimethylaniliniumboratabenzole oder Tritylboratabenzole (siehe WO-A-97/36937) eingesetzt werden. Besonders bevorzugt werden Borane oder Borate eingesetzt, welche mindestens zwei perfluorierte Arylreste tragen. Als besonders geeignete Aktivatorverbindung (B) werden Verbindung aus der Gruppe Aluminoxan, Dimethylaniliniumtetrakispentafluorophenylborat, Trityltetrakispentafluorophenylborat oder Trispentafluorophenylboran verwendet.

Auch Aktivatorverbindungen mit stärker oxidierenden Eigenschaften sind einsetzbar, wie z.B. Silberborate, insbesondere Silbertetrakispentafluorophenylborat oder Ferroceniumborate, insbesondere Ferroceniumtetrakispentafluorophenylborat oder Ferroceniumtetraphenylborat.

Weiterhin können als Aktivatorkomponente Verbindungen wie Aluminiumalkyle, insbesondere Trimethylaluminium, Triethylaluminium, Triisobutylaluminium, Tributylaluminium, Dimethylaluminiumchlorid, Dimethylaluminiumfluorid, Methylaluminiumdichlorid, Methylaluminiumsesquichlorid, Diethylaluminiumchlorid oder Aluminiumtrifluorid eingesetzt werden. Auch die Hydrolyseprodukte von Aluminiumalkylen mit Alkoholen können eingesetzt werden (siehe z.B. WO-A-95/10546).

Als Aktivatorverbindungen können des weiteren auch Alkylverbindungen von Lithium, Magnesium oder Zink verwendet werden, wie z.B. Methylmagnesiumchlorid, Methylmagnesiumbromid, Ethylmagnesiumchlorid, Ethylmagnesiumbromid, Butylmagnesiumchlorid, Dimethylmagnesium, Diethylmagnesium, Dibutylmagnesium, Methyllithium, Ethyllithium, Methylzinkchlorid, Dimethylzink oder Diethylzink.

Manchmal ist es wünschenswert eine Kombination von verschiedenen Aktivatoren zu verwenden. Dies ist z.B. bei den Metallocenen bekannt, bei denen Borane, Boroxine (WO-A-93/16116) und Borate oft in Kombination mit einem Aluminiumalkyl eingesetzt werden. Generell ist auch eine Kombination von verschiedenen Aktivatorkomponenten mit dem erfindungsgemäßen Übergangsmetallkomplex möglich.

Die Menge der zu verwendenden Aktivatorverbindungen hängt von der Art des Aktivators ab. Generell kann das Molverhältnis Metallkomplex (A) zu Aktivatorverbindung (B) von 1:0.1 bis 1:10000 betragen, bevorzugt werden 1:1 bis 1:2000. Das Molverhältnis von Metallkomplex (A) zu Dimethylaniliniumtetrakispentafluorophenylborat, Trityltetrakispentafluorophenylborat oder Trispentafluorophenylboran liegt zwischen 1:1 und 1:20, bevorzugt zwischen 1:1 und 1:15, und besonders bevorzugt zwischen 1:1 und 1:5, zu Methylaluminoxan bevorzugt zwischen 1:1 und 1:2000 und besonders bevorzugt zwischen 1:10 und 1:1000. Da viele der Aktivatoren, wie z.B. Aluminiumalkyle gleichzeitig zur Entfernung von Katalysatorgiften verwendet werden (sogenannte scavenger), ist die eingesetzte Menge von der Verunreinigung der übrigen Einsatzstoffe abhängig. Der Fachmann kann jedoch durch einfaches Probieren die optimale Menge bestimmen.

Der Übergangsmetallkomplex kann dabei entweder vor oder nach Kontaktierung mit den zu polymerisierenden Olefinen mit der oder den Aktivatorverbindungen in Kontakt gebracht werden. Auch eine Voraktivierung mit ein oder mehreren Aktivatorverbindungen vor der Durchmischung mit dem Olefin und weitere Zugabe der gleichen oder anderer Aktivatorverbindungen nach Kontaktierung dieses Gemisches mit dem Olefin ist möglich. Eine Voraktivierung erfolgt in der Regel bei Temperaturen zwischen 10-100°C, bevorzugt zwischen 20-80°C.

Auch kann mehr als einer der erfindungsgemäßen Übergangsmetallkomplexe gleichzeitig mit dem zu polymerisierenden Olefin in Kontakt gebracht werden. Dies hat den Vorteil, daß so ein weiter Bereich an Polymeren erzeugt werden kann. Auf diese Weise können z.B. bimodale Produkte hergestellt werden.

Ein ebenfalls breites Produktspektrum kann durch Verwendung der erfindungsgemäßen Komplexe in Kombination mit mindestens einem für die Polymerisation von Olefinen üblichen Katalysator (C) erreicht werden. Als Katalysatoren (C) kommen hierbei besonders klassische Ziegler Natta Katalysatoren auf der Basis von Titan, klassische Phillips Katalysatoren auf der Basis von Chromoxiden, Metallocene, die sogenannten constrained geometry Komplexe(siehe z.B. EP-A-0416815 oder EP-A-0420436), Nickel und Palladium Bisimin-Systeme (zu deren Darstellung siehe WO-A-98/03559), Eisen und Cobalt Pyridinbisimin-Verbindungen (zu deren Darstellung siehe WO-A-98/27124) oder Chromamide (siehe z.B. JP-A-9 020 692) verwendet werden. So können auch durch derartige Kombinationen z.B. bimodale Produkte hergestellt oder in situ Comonomer erzeugt werden. Bevorzugt wird hierbei mindestens ein Übergangsmetallkomplex (A) in Gegenwart von mindestens einem für die Polymerisation von Olefinen üblichen Katalysator (C) und gewünschtenfalls ein oder mehreren Aktivatorverbindungen (B) verwendet. Hierbei sind je nach Katalysatorenkombinationen (A und C) ein oder mehrere Aktivatoren vorteilhaft. Die Polymerisationskatalysatoren (C) können ebenfalls geträgert sein und gleichzeitig oder in einer beliebigen Reihenfolge mit dem erfindungsgemäßen Komplex (A) verwendet werden.

Die erfindungsgemäßen Katalysatoren (A) können optional auch auf einem organischen oder anorganischen Träger immobilisiert und in geträgerter Form in der Polymerisation verwendet werden. Dies ist eine gängige Methode, um Reaktorablagerungen zu vermeiden und die Polymermorphologie zu steuern. Als Trägermaterialien werden bevorzugt Kieselgel, Magnesiumchlorid, Aluminiumoxid, mesoporöse Materialien, Aluminosilikate und organische Polymere wie Polyethylen, Polypropylen oder Polystyrol und insbesondere Kieselgel oder Magnesiumchlorid verwendet.

Die Aktivatorverbindungen (B) und der Metallkomplex (A) können mit dem Träger in verschiedenen Reihenfolgen oder gleichzeitig in Kontakt gebracht werden. Dies wird in der Regel in einem inerten Lösungsmittel durchgeführt, das nach der Immobilisierung abfiltriert oder verdampft werden kann. Auch die Verwendung des noch feuchten, geträgerten Katalysators ist aber möglich. So kann zuerst die Mischung des Trägers mit dem oder den Aktivatorverbindungen oder auch zuerst das Kontaktieren des Trägers mit dem Polymerisationskatalysator erfolgen. Auch eine Voraktivierung des Katalysators mit einer oder mehreren Aktivatorverbindungen vor der Durchmischung mit dem Träger ist möglich. Die Menge an Metallkomplex (A) (in mmol) pro Gramm Trägermaterial kann stark variieren z.B. zwischen 0.001 bis 1. Die bevorzugt Menge an Metallkomplex (A) pro Gramm Trägermaterial liegt zwischen 0.001 und 0.5 mmol/g, und besonders bevorzugt zwischen 0.005 und 0.1 mmol/g. In einer möglichen Ausführungsform kann der Metallkomplex (A) auch in Anwesenheit des Trägermaterials hergestellt werden. Eine weitere Art der Immobilisierung ist auch die vorpolymerisation des Katalysatorsystems mit oder ohne vorherige Trägerung.

Durch das erfindungsgemäßen Verfahren lassen sich Polymerisate von Olefinen darstellen. Der Begriff Polymerisation, wie er zur Beschreibung der Erfindung hier verwendet wird, umfaßt sowohl Polymerisation als auch Oligomerisation, d.h. Oligomere und Polymere mit Molekulargewichten im Bereich von etwa 56 bis 4000000 können durch diese Verfahren erzeugt werden.

Auf Grund ihrer guten mechanischen Eigenschaften eignen sich die mit den erfindungsgemäßen Komplexen hergestellten Polymerisate und Copolymerisate von Olefinen vor allem für die Herstellung von Folien, Fasern und Formkörpern. Dies gilt sowohl für die Polymerisate und Copolymerisate, die man durch Verwendung von einem oder mehreren der erfindungsgemäßen substituierten Monocyclopentadie-nyl-, Monoindenyl-, Monofluorenyl- oder Heterocyclopentadienylkomplexe von Chrom, Molybdän oder Wolfram erhält, als auch für die Kombinationen von diesen mit ein oder mehreren für die Polymerisation von Olefinen üblichen Katalysatoren (C).

Die erfindungsgemäßen Katalysatoren zeigen sehr gute Produktivitäten. Vergleicht man die Ergebnisse von DE-A-19710615, so findet man, vor allem unter Polymerisationsbedingungen, die industriell relevant sind (eine Stunde Polymerisationszeit) bessere (druckgemittelte) Aktivitäten.

Unerwarteterweise zeichnen sich die erfindungsgemäßen Komplexe auch durch gute thermische Stabilität aus. Sie sind z.B. über einen Zeitraum von mehreren Stunden in Toluol unzersetzt am Rückfluß erhitzbar.

Die folgenden Beispiele erläutern die Erfindung:

Alle Arbeiten wurden, falls nicht anders vermerkt, unter Luftund Feuchtigkeitsausschluß durchgeführt. Toluol und THF wurden über eine Molekularsiebsäule oder Natrium/Benzophenon getrocknet und abdestilliert. Triisobutylaluminium (2 M in Heptan) wurden von der Firma Witco, MAO (Methylaluminoxan 10% in Toluol) und N,N'-Dimethylaniliniumtetrakis(pentafluorophenyl)borat von der Firma Albemarle und MAO (Methylaluminoxan 30% in Toluol) von der Firma Witco GmbH erhalten.

Nachfolgend genannte Ausgangsverbindungen wurden nach den zitierten Literaturvorschriften dargestellt:
- 8-Bromchinolin
   a) J. Mirek, Roczniki Chem. 1960, 34, 1599-1606;
   b) E. Reimann in Houben-Weil, Methoden der Organischen Chemie, 4. Aufl., Band E7a, 366
- 8-Brom-2-methylchinolin: C. M. Leir, J. Org. Chem. 1977, 42, 911 - 913
- 2,3,4,5-Tetramethylcyclopent-2-enon: F.X. Kohl, P. Jutzi, J. Organomet. Chem. 1983, 243, 119 - 121
- 2,3-Dimethylcyclopent-2-enon
   a) M. Dorsch, V. Jäger, W. Spönlein, Angew. Chem. 1984, 96, 815 - 16; Angew. Chem., Int. Ed. Engl. 1984, 23, 798;
   b) M. Dorsch, Dissertation Universität Würzburg, 1985
- 1-(8-Chinolyl)-2,3,4,5-tetramethylcyclopentadien und 1-(8-Chinolyl)-(2,3,4,5-tetramethyl)trimethylsilylcyclopentadien: M. Enders, R. Rudolph, H. Pritzkow Chem. Ber. (1996), 129, 459-463.

### Analytik

NMR-Proben wurden unter Inertgas abgefüllt und gegebenenfalls eingeschmolzen. Als interner Standard dienten in den ¹H- und ¹³C-NMR-Spektren die Lösungsmittelsignale, deren chemische Verschiebung auf TMS umgerechnet wurde. NMR-Messungen wurden an einem Bruker AC 200 und, insbesondere COSY-Experimente, an einem Bruker AC 300 durchgeführt.

Massenspektren wurden an einem VG Micromass 7070 H und einem Finnigan MAT 8230 gemessen. Hochaufgelöste Massenspektren wurden an den Geräten Jeol JMS-700 und VG ZAB 2F gemessen.

Elementaranalysen wurden an einem Heraeus CHN-O-Rapid bestimmt.

Der Comonomergehalt des Polymeren (%C₆), dessen Methylseitenkettengehalt pro 1000 C-Atome der Polymerkette (CH₃/1000) und dessen Dichte wurde durch IR Spectroskopie bestimmt.

Der η Wert wurde mit einem automatischen Ubbelohde Viskometer (Lauda PVS 1) mit Dekalin als Lösungsmittel bei 130 °C bestimmt (ISO1628 bei 130°C, 0,001 g/ml Decalin).

Die Bestimmung der Molmassenverteilungen und der daraus abgeleiteten Mittelwerte Mn, Mw und Mw/Mn erfolgte mittels Hochtemperatur-Gelpermeations-chromatographie in Anlehnung an DIN 55672 unter folgende Bedingungen: : Lösungsmittel: 1,2,4-Trichlorbenzol, Fluß: 1ml/min, Temperatur: 140°C, Kalibrierung mit PE Standards.

### Verwendete Abkürzungen:

- Cp: Cyclopentadienyl
- Me: Methyl
- Ph: Phenyl
- Kat.: Katalysator (der erfindungsgemäße Übergangsmetallkomplex)
- get.Kat.: geträgerter Katalysator
- T: Temperatur während der Polymerisation
- t: Zeitdauer der Polymerisation
- p: Druck während der Polymerisation
- Mw: Gewichtsmittel des Molekulargewichts
- Mn: Zahlenmittel des Molekulargewichts
- Tm: Schmelztemperatur
- η: Staudingerindex (Viskosität)
- Dichte: Polymerdichte
- CH₃/1000: Anzahl der Methylseitenketten pro 1000 C-Atomen
- %C₆: Comonomergehalt des Polymeren in Gew.-%
- THF: Tetrahydrofuran
- MAO: Methylaluminoxan

### Allgemeine Synthesevorschrift:

### Ligandsynthesen:

8-Bromchinolin bzw. N,N-Dimethylanilin wurde mit einer äquimolaren Menge n-BuLi versetzt und anschließend mit Tetramethylcyclopentenon bzw. 1-Indanon umgesetzt. Nach Hydrolyse und säurekatalysierter Wasserabspaltung wurde der entsprechende Ligand isoliert (Ausbeuten zwischen 40 und 70 %).

### Komplexsynthesen:

Die Ligandanionen wurden durch Deprotonierung mit n-BuLi bzw. Kaliumhydrid hergestellt und mit dem entsprechenden Metallhalogenid umgesetzt. Die Reinigung erfolgte durch Umfällen oder Umkristallisieren (Ausbeuten in der Regel ca. 60%).

### Beispiel 1

### Synthese von 1-(8-Chinolyl)-2,3-dimethylcyclopentadien

5 ml n-BuLi (2.5 M in Hexan, 12.5 mmol) wurden bei -95°C zu einer Lösung von 2.5 g 8-Bromchinolin (12 mmol) in 120 ml THF zugetropft, 15 Minuten gerührt und anschließend 1.3 g 2,3-Dimethylcyclopent-2-enon (12 mmol), gelöst in 10 ml THF, zugegeben. Nach Erwärmen auf Raumtemperatur wurde die Lösung eine Stunde am Rückfluß erhitzt. Die abgekühlte Reaktionsmischung wurde mit Eis hydrolysiert, mit Salzsäure angesäuert und dann mit Ammoniaklösung neutralisiert. Die wäßrige Phase wurde mit Diethylether extrahiert und die vereinigten organischen Phasen werden getrocknet. Nach Destillation bei 150°C/ 0.05 mbar wurden 1.1 g 1-(8-Chinolyl)-2,3-dimethylcyclogentadien (40 %) als gelbes, viskoses Öl erhalten.
- 1H-NMR:: (200 MHz, CDCl₃) δ = 1.90 (s, 3H, C*H*₃); 2.03 (s, 3H, C*H*₃); 3.59 (m, 2H, C*H*₂); 6.19 (s, 1H, C*H*); 7.32 - 7.73 (m, 4H, Chinolin-*H*); 8.13 (dd, 1H); 8.89 (dd, 1H).
- 13C-NMR:: (50 MHz, CDCl₃) δ = 12.4, 14.1 (*C*H₃); 44.4 (*C*H₂); 120.5, 125.8, 126.3, 127.1, 129.8, 135.9, 149.4 (CH); 128.5, 135.9, 139.1, 140.0, 143.8, 146.8 (quart. C).
- MS (EI):: m/z (%) = 221 (86) [M⁺]; 220 (100) [M⁺ -H]; 206 (31) [M⁺ -CH₃]; 191 (9) [M⁺ -2CH₃].

### Beispiel 2

Darstellung von Dichloro-[1-(8-chinolyl)-2,3,4,5-tetramethylcyclopentadienyl]chrom(III) aus 1-(8-chinolyl)-2,3,4,5-tetramethylcyclopentadienyl]Kalium Es wurden 0.06 g Kaliumhydrid (1.61 mmol) in 20 ml THF vorgelegt und 0.4 g 1-(8-Chinolyl)-2,3,4,5-tetramethylcyclopentadien (1.61 mmol) unter Rühren zugegeben. Nach drei Stunden Rühren schied sich ein roter Feststoff aus der Lösung ab. Diese Suspension wurde mit einer Transferkanüle in eine Mischung aus 0.6 g CrCl₃(THF)₃ in 20 ml THF bei Raumtemperatur überführt. Nach 16 Stunden rühren, wurde das THF im Hochvakuum entfernt und der Feststoff in Toluol aufgenommen. Das unlösliche Kaliumchlorid wurde abgetrennt. Das Lösungsmittel wurde entfernt, der Rückstand mit Hexan gewaschen und im Hochvakuum getrocknet. Das Produkt wurden 0.4 g grünes Pulver in 70% Ausbeute isoliert.
- MS (EI) :m/z: (%) = 370 (12, M⁺); 334 (19, M⁺-Cl); 249 (99, Me₄C₅(Chinolin)⁺-H)
- HR-EI-MS:: 370.02213 (ber.), 370.02203 (gem.).

### Beispiel 3

### Darstellung von Dichloro-[1-(8-chinolyl)-2,3,4,5-tetramethylcyclopenhadienyl]chrom(III) aus 1-(8-chinolyl)-2,3,4,5-tetramethyl trimethylsilylcyclopentadien

Es wurden 0.08 g CrCl₃(THF)₃ (0.23 mmol) in 20 ml Toluol suspendiert und 0.08 g 1-(8-chinolyl)-2,3,4,5-tetramethyl-trimethylsilylcyclopentadien (0.23 mmol) zugegeben. Das Reaktionsgemisch wurde drei Stunden am Rückfluß erhitzt und nach weiteren 16 Stunden Rühren bei Raumtemperatur das Toluol im Hochvakuum abdestilliert. Das erhaltene grüne Pulver wurde mit Hexan gewaschen und im Hochvakuum getrocknet.
- MS (EI) :: m/z (%) = 370 (12, M⁺); 334 (19, M⁺-Cl); 249 (99, Me₄Cp(Chinolin)⁺-H)

### Beispiel 4

### 1-(8-Chinolyl)indenylchrom(III)dichlorid

### 4.1. Darstellung von 1-(8-Chinolyl)inden

8-Bromchinolin (10.4 g, 50mmol) wurde in 100 ml THF vorgelegt und auf etwa -100 °C gekühlt. 20ml n-BuLi (2.5M in Hexan, 50 mmol) wurden zugetropft, wobei die Innentemperatur unter -80°C gehalten wurde. Nach beendeter Zugabe wurde weitere 15 min bei -80°C gerührt und dann 6.6 g 1-Indanon (50 mmol), gelöst in 30 ml THF, zugetropft. Danach ließ man das Reaktionsgemisch langsam auf Raumtemperatur kommen und erhitzte dann 3 h unter Rückfluß. Nachdem die Mischung auf Raumtemperatur abgekühlt war, wurde zunächst Eis und dann Salzsäure bis etwa pH 1 zugegeben und 30 min gerührt. Wäßrige und organische Phase wurden getrennt, die wäßrige Phase mit Ammoniaklösung bis etwa pH 9 versetzt, mit Ether extrahiert und die vereinigten organischen Phasen anschließend im Vakuum zur Trockene eingeengt. Das so erhaltene viskose Öl (1-(8-Chinolyl)-indan-1-ol (8H₂O)) wurde mit Salzsäure bis pH 0 versetzt, 2 Stunden unter Rückfluß erhitzt und anschließend neutralisiert. Nach Aufarbeiten und Trocknen wurden 6.6 g 1-(8-Chinolyl)inden (55%) als farbloser Feststoff isoliert.

1-(8-Chinolyl)-indan-1-ol (8H₂O)
- 1H-NMR:: (200 MHz, CDCl₃) δ = 2.58 - 2.87 (m, 3H, C*H*₂); 6.94 (dd, 1H, Chinolin C*H*); 7.24 - 7.36 (m, 4H, C*H*); 7.44 - 7.50 (m, 2H, *H*3, *H*6); 7.70 (dd, 1H, Chinolin C*H*); 8.23 (dd, 1H); 8.66 (s, br, 1H, O*H*); 8.92 (dd, 1H).
- 13C-NMR:: (200 MHz, CDCl₃) δ = 30.2, 44.8 (*C*H₂); 87.2 (*C*OH); 120.8, 124.7, 125.1, 126.4, 126.9, 127.2, 127.5, 128.2, 137.9, 147.7 (*C*H); 127.4, 129.2, 142.6, 143.8, 146.7 (quart. *C*).

1-(8-Chinolyl)inden
- Smp.:: 108 °C.
- ¹H-NMR:: (200 MHz, CDCl₃) δ = 3.69 (d, 2H, C*H*₂); 6.80 (t, 1H, =C*H*); 7.12 - 7.26 (m, 3H); 7.41 (dd, 1H); 7.55 - 7.64 (m, 2H); 7.81 - 7.88 (m, 2H); 8.21 (dd, 1H); 8.92 (dd, 1H).
- ¹³C-NMR:: (50 MHz, CDCl₃) δ = 38.8 (*C*H₂); 121.0, 121.2, 123.8, 124.5, 125.8, 126.3, 127.8, 130.0, 133.5, 136.1, 150.0 (*C*H); 128.6, 135.9, 143.7, 144.0, 145.6, 146.7 (quart. *C*).
- MS (EI):: m/z (%) = 243 (65) [M⁺]; 242 (100) [M⁺-H].
- HR-MS (EI):: (EI): 243.1048 (ber.), 243.1038 (gef.).

| | | | | |
|---|---|---|---|---|
| C,H,N-Analyse | ber. | 88.86% C, | 5.39% H, | 5.75% N |
| | gef. | 87.55% C, | 5.52% H, | 5.92% N. |

### 4.2. Darstellung von Dichloro-[1-(8-chinolyl)indenyl]chrom(III):

In 20 ml THF wurden 0.05 g Kaliumhydrid (1.23 mmol) suspendiert und 0.3 g 1-(8-Chinolyl)inden (1.23 mmol) langsam zugegeben. Die so erhaltene violette Suspension wurde nach dreistündigem Rühren bei Raumtemperatur zu einer Mischung von 0.46 g Chrom(III)chloridx3THF (1.23 mmol) in 50 ml THF getropft und nach beendeter Zugabe noch 16 Stunden gerührt. Das Lösungsmittel wurde im Vakuum entfernt und der so erhaltene Feststoff mit heißem Toluol extrahiert. Nach Abdestillieren des Solvens aus den vereinten Extrakten fiel das Produkt als grünes Pulver an, das mehrmals mit Hexan gewaschen und im Hochvakuum getrocknet wurde. 0.22 g Dichloro-[1-(8-chinolyl)indenyl]chrom(III) (50%) wurden erhalten.

Alternativ konnte der Rückstand auch in Methylenchlord aufgenommen werden und nach Abtrennung von Kaliumchlorid und Entfernen des Lösungsmittels wurde ebenfalls der Chromkomplex erhalten.
- MS (EI) :: m/z (%) = 364 (0.2, M⁺); 329 (0.1, M⁺-Cl); 242 (100, Ind(Chinolin)⁺)
- HR-EI-MS:: 363.97519 (ber.), 363.97615 (gem.)

### Beispiel 5

### 5.1. Darstellung von 1-(8-Chinolyl)-2-methylinden

Zu 3.50 g o-Bromchinolin (16.8 mmol) gelöst in 50 ml THF wurden bei 100°C 6.70 ml n-BuLi (16.8 mmol) zugetropft und anschließend bei 80°C 15 Minuten gerührt. Dann wurde eine Lösung aus 50 ml THF und 2.45 g 2-Methyl-1-indanon (16.8 mmol) innerhalb von 10 Minuten dem lithiierten Bromchinolin zugefügt. Man ließ auf Raumtemperatur kommen und siedete die Lösung drei Stunden am Rückfluß. Nach Abkühlen auf Raumtemperatur wurde mit Eis und Salzsäure auf pH 1 angesäuert und anschließend 3 Stunden am Rückfluß gekocht. Man stellte das Reaktionsgemisch mit Ammoniaklösung auf pH 9 ein und extrahierte die wässrige Phase mit Diethylether. Die vereinten organischen Phasen wurden getrocknet und das Lösungsmittel entfernt. Die Reinigung des Rohprodukts erfolgte durch Destillation im Vakuum bei 150-160°C 10⁻² mbar. 1.5 g 1-(8-Chinolyl)-2-methylinden (45 %) wurden als ein gelbes zähes Harz erhalten.

### 5.2. Darstellung von Dichloro-[1-(8-chinolyl)-2-methylindenyl]chrom(III)

1-(8-Chinolyl)-2-methylinden (0.3 g, 1.16 mmol) wurden unter Eiskühlung zu einer Suspension von 0.04 g Kaliumhydrid (1.16 mmol) in 10 ml THF getropft. Dann wurde auf Raumtemperatur erwärmt und drei Stunden gerührt. Die tief violette Lösung wurde bei - 30°C zu CrCl₃(THF)₃ in 20 ml THF getropft. Nach beendeter Zugabe wurde die Reaktionsmischung aufgewärmt, das Lösungsmittel im Vakuum entfernt, der Rückstand mit warmem Toluol extrahiert und ausgefallenes Kaliumchlorid abfiltriert. Nach Entfernen des Solvens im Hochvakuum wurden 0.35 g Dichloro-[1-(8-chinolyl)-2-methylindenyl]chrom (III) (79 %) als ein grünes Pulver erhalten.

### Beispiel 6

### 6.1. Darstellung von 1-(2-Methyl-8-chinolyl)-2,3,4,5-tetramethyl-cyclopentadien

Eine Lösung von 4.4 g 8-Brom-2-methylchinolin (20 mmol) in 50 ml THF wurde auf -78°C gekühlt und 8.8 ml n-BuLi (2.5 M in Hexan, 22 mmol) unter Rühren zugetropft. Nach 10 min Rühren wurden 3.5 g 2,3,4,5-Tetramethylcyclopentenon (25 mmol) zugetropft, die Lösung auf Raumtemperatur erwärmt und eine Stunde unter Rückfluß erhitzt. Die Lösung wurde abgekühlt, Eis und Salzsäure bis etwa pH 1 zugegeben, und nach Neutralisieren mit Ammoniaklösung wurden die Phasen getrennt und die wäßrige Phase mit Pentan extrahiert. Nach Trocknen der vereinigten organischen Extrakte wurde das Pentan im Vakuum entfernt, und das verbleibende braune Öl im Hochvakuum destilliert (Sdp.: 115°C / 0.01 mbar).
1-(2-Methyl-8-chinolyl)-2,3,4,5-tetramethyl-cyclopentadien wurde als gelbes, viskoses Öl in 60 % Ausbeute (3.2 g) erhalten.
- 1H-NMR:: (200 MHz, CDCl₃) δ = 6a: 1.55 (s, 6H); 1.78 (s, 6H); 2.64 (s, 3H); 5.53 (s, 1H); 6.84 (dd, 1H); 7.12 - 7.50 (m, 3H); 7.90 (d, 1H).
6b: 0.71 (d, ³*J*(H,H) = 7.6 Hz, 3H) ; 1.82 (s, 3H) ; 1.87 - 1.88 (m, 6H); 2.58 (s, 3H); 4.20 (m, 1H); 7.09 - 7.55 (m, 4H) ; 7.89 (d, 1H).
- 13C-NMR:: (50 MHz, CDCl₃) δ = 6a: 11.2, 11.3 (*C*H₃); 25.6 (Chinolin *C*H₃); 56.3 (allyl *C*H); 121.3, 125.7, 126.4, 130.5 , 136.2 (chinolin *C*H), 135.6, 138.9, 139.0, 1412.8, 147.0, 157.4 (quart. *C*). 6b: 12.0, 12.2, 13.0, 14.2 (*C*H₃); 25.7 (Chinolin *C*H₃); 52.1 (allyl *C*H); 121.4, 125.0, 125.3, 125.8, 136.0 (Chinolin *C*H); 126.7, 126.8, 131.2, 134.6, 138.4, 142.7, 146.7, 157.8 (quart. *C*).
- MS (EI):: m/z (%) = 263 (85) [M⁺]; 262 (100) [M⁺ -H]; 248 (98) [M⁺ -CH₃]; 232 (20) [M⁺ -H -2CH₃]; 218 (10) [M⁺ -3CH₃].
- HR-MS (EI):: 263.1674 (ber.), 263.1647 (gef.)

### 6.2. Darstellung von Dichloro±[1-(2-Methyl-8-chinolyl)-2,3,4,5-tetramethylcyclopentadienyl]chrom(III)

Es wurden 0.3 g 1-(2-Methyl-8-chinolyl)-2,3,4,5-tetramethyl-cyclopentadien (1.14 mmol) in 30 ml THF mit 0.45 ml n-Butyllithium (2.5M in Hexan, 1.14 mmol) deprotoniert. Nach zwei Stunden Rühren tropfte man die rote Lösung zu einer Suspension aus Chrom(III)chlorid in 20 ml THF. Nach 16 Stunden Rühren bei Raumtemperatur wurden die Solventien abkondensiert und der so erhaltene Rückstand in 20 ml Toluol aufgenommen. Die grüne Suspension wurde filtriert und der Rückstand mehrmals mit heißem Toluol extrahiert. Nach üblicher Aufarbeitung fiel das Produkt als grünes Pulver (0.22 g) in 50 % Ausbeute an.
- MS (EI):: m/z (%) = 384 (54, M⁺); 348 (100, M⁺ - Cl); 263 (62, M⁺-2Cl-Cr+ 2H) ; 248 (49, M⁺-2Cl-Cr-CH).
- HR-EI-MS:: 384.03778 (ber.) , 384.03775 (gem.).

### Beispiele 7 bis 17

### Polymerisation mit Ethen

Die in Tabelle 1 aufgeführten Polymerisationsbeispiele wurden bei einem Ethendruck von 1 bar in einem 50 bzw. 250 ml Kolben mit Überdruckventil durchgeführt.

Die Komplexe wurden in der jeweiligen Menge Toluol suspendiert und mit der entsprechenden Menge Methylaluminoxan aktiviert, worauf sich homogene violette Lösungen bildeten. Ethen wurde dann unter Rühren übergeleitet. Das Reaktionsgefäß wurde mit einem Wasserbad bei der angegebenen Temperatur gehalten. Nach Beendigung der Polymerisation wurden die erhaltenen Polymere mit salzsaurem Methanol zehn Minuten gerührt. Das Polyethylen fiel als weißer Feststoff an, der abfiltriert, mit Methanol gewaschen und bei 90°C getrocknet wurde.

In den Beispielen 7 bis 10 würde der Komplex aus Beispiel 2: Dichloro-[1-(8-chinolyl)-2,3,4,5-tetramethylcyclopentadienyl]chrom(III) und in den Beispielen 11 bis 17 der Komplex aus Beispiel 4: Dichloro-[1-(8-chinolyl)indenyl]chrom (III) verwendet.

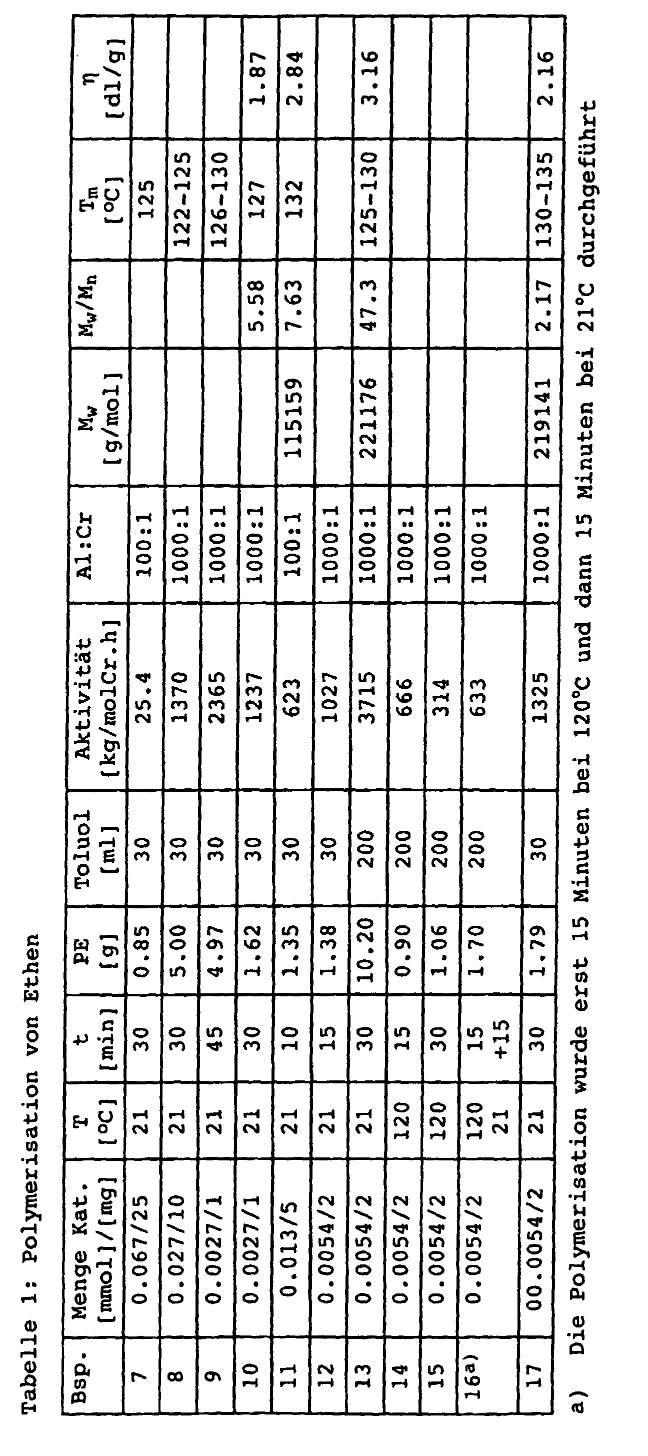

### Beispiel 18.

### Copolymerisation von Ethen mit 1-Hexen unter Verwendung von 1-(8-Chinolyl)indenylchrom(III)dichlorid als Katalysator.

Der Versuch wurde analog den Beispielen 7 bis 17 in Anwesenheit von 10 ml 1-Hexen durchgeführt. 2 mg (0.0054 mmol) Chromkomplex aus Beispiel 4 in 100 ml Toluol wurden hierbei verwendet. Das Verhältnis Al:Cr betrug 1000:1. Die Polymerisation wurde nach 30 Minuten abgebrochen. Es wurde 3.09 g Copolymer isoliert. Dies entspricht einer Aktivität von 1144 g Polymer/(mmol·bar·h).

### Beispiele 19 bis 40

### Polymerisation von Ethen und Copolymerisation von Ethen mit 1-Hexen

Die Polymerisationsversuche wurden in einem mit Kontaktthermometer, Rührer mit Teflonblatt, Heizpilz und Gaseinleitungsrohr versehenen 11-Vierhalskolben durchgeführt. Unter Argon wurde jeweils zwischen 5 bis 20 µmol der Komplexe in 250 ml Toluol bei 40°C vorgelegt.

Bei der Aktivierung mit MAO wurde jeweils die in Tabelle 2 angegebene Menge 1,6 M MAO Lösung in Toluol zugegeben.

Bei der Aktivierung mit Borat wurde die in Tabelle 2 angegebene Menge an DMAB (Dimethylanilinium-tetrakis(pentafluorophenyl)borat) zugegeben, auf 70°C erhitzt und anschließend mit TiBAl (Triisobutylaluminium) versetzt. Die Lösung würde danach auf 40°C abgekühlt und dann ca. 20 bis 40 l/h Ethylen bei Atmosphärendruck für eine Stunde durchgeleitet. Bei den Copolymerisationsversuchen wurden vor der Ethylenzugabe 5ml Hexen vorgelegt und anschließend Ethylen durchgeleitet. Die Restmenge an Hexen wurde innerhalb von 15 min über einer Tropftrichter zudosiert.

Die Reaktion wird durch Zugabe eines Gemisches aus 15 ml konzentrierter Salzsäure und 50 ml Methanol abgestoppt und 15 min nachgerührt. Nach Zugabe von weiteren 250 ml Methanol und 15 min rühren, wurde abfiltriert, dreimal mit Methanol gewaschen und bei 70°C getrocknet. In Tabelle 2 sind die Polymerisations- bzw. Produktdaten zusammengefaßt.

In den Beispielen 19 bis 23 würde der Komplex aus Beispiel 2: Dichloro-[1-(8-chinolyl)-2,3,4,5-tetramethylcyclopentadienyl]chrom(III), in den Beispielen 24 bis 34 der Komplex aus Beispiel 4: Dichloro-[1-(8-chinolyl)indenyl]chrom(III), in den Beispielen 35 bis 38 der Komplex aus Beispiel 5: Dichloro-[1-(8-chinolyl)-2-methylindenyl]chrom(III) und in den Beispielen 39 bis 40 der Komplex aus Beispiel 6: Dichloro±[1-(2-Methyl-8-chinolyl)-2,3,4,5-tetramethylcyclopentadienyl]chrom(III) verwendet.

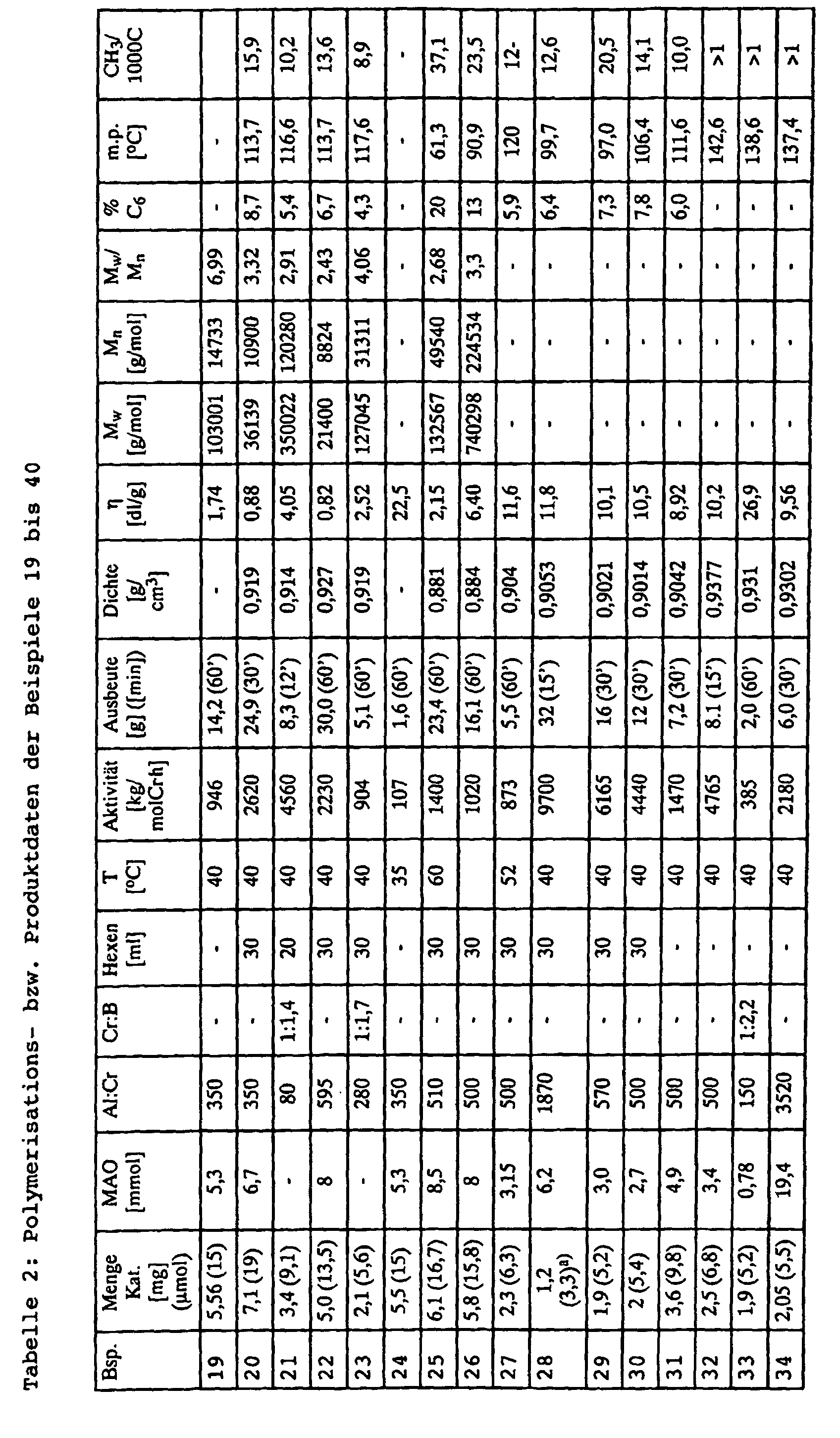

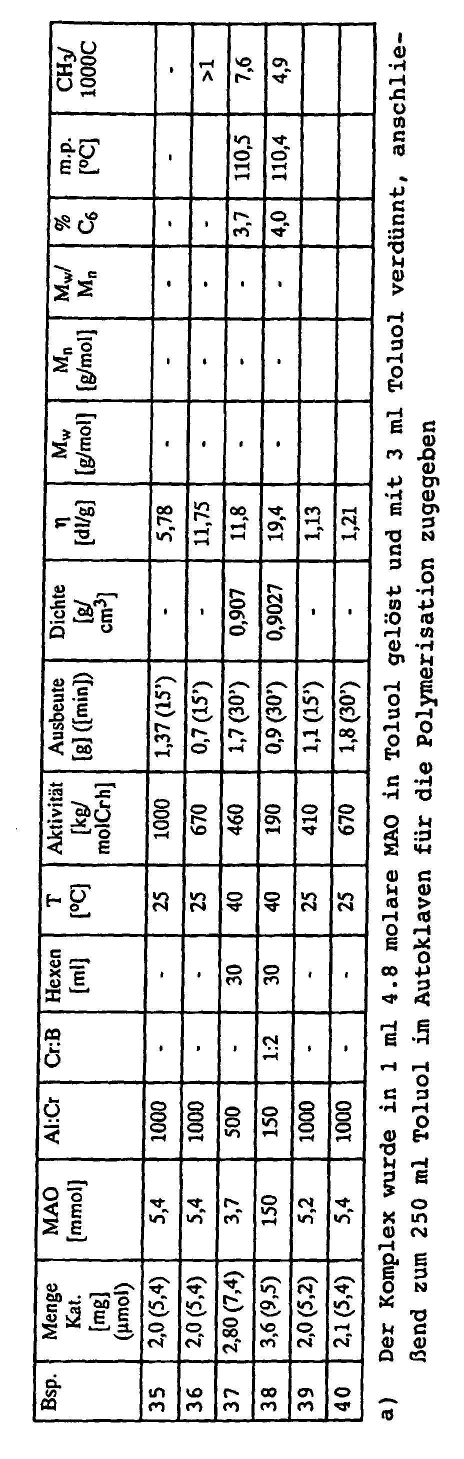

### Beispiele 41 bis 44.

### Autoklaven Coolymerisationen von Ethylen mit 1-Hexen

In einem 1-l-Stahlautoklaven wurden die in Tabelle 3 angegebenen MAO Mengen (1.6 M in Toluol), 300 ml Toluol und 50 ml Hexen vorgelegt. Der Autoklav wurde auf die in Tabelle 3 angegebene Temperatur gebracht und der in Toluol gelöste Katalysator mit Ethylen über eine Schleuse zudosiert, so daß der gewünschte Ethylendruck gleichzeitig eingestellt wurde.

Die Daten zu den Polymerisationsbedingungen und den Produkteigenschaften können aus Tabelle 3 entnommen werden.

In den Beispielen 41 bis 43 wurde der Komplex aus Beispiel 2: Dichloro-[1-(8-chinolyl)-2,3,4,5-tetramethylcyclopentadienyl]chrom(III) und in Beispiel 44 der Komplex aus Beispiel 4: Dichloro-[1-(8-chinolyl)indenyl]chrom(III) verwendet.

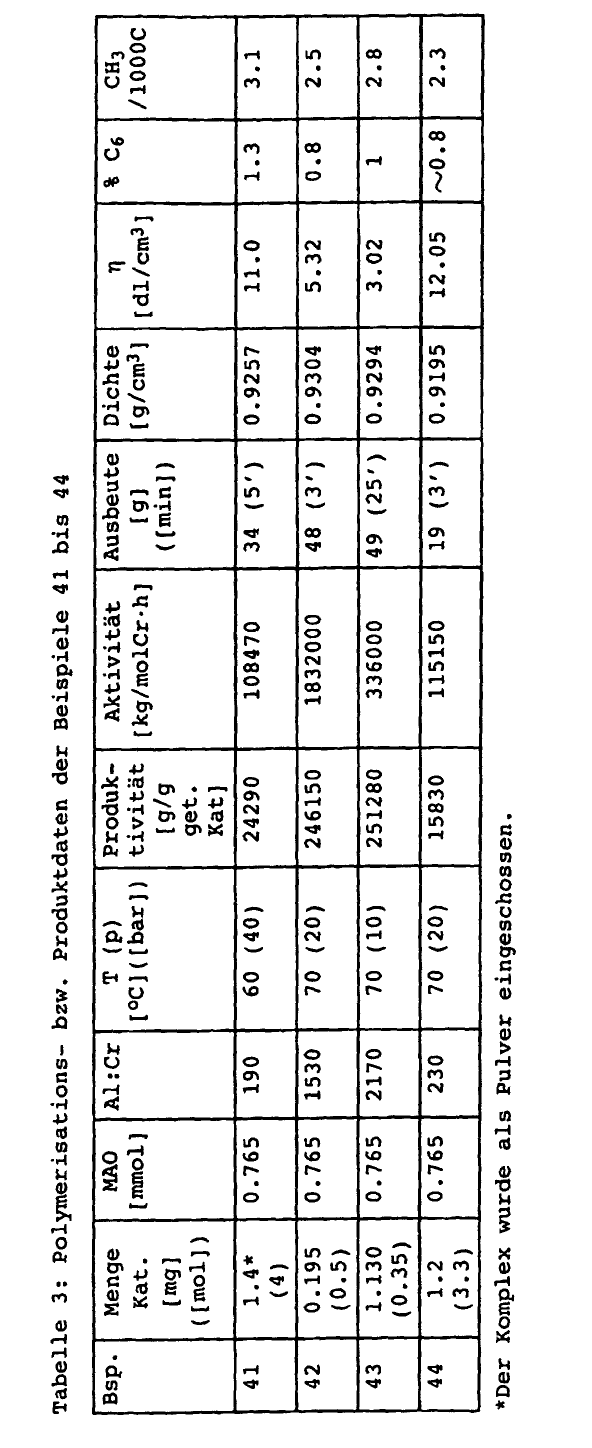

### Beispiel 45 bis 47.

### Polymerisation von Propen

Die entsprechenden Chromkomplexe wurden in 30 ml Toluol suspendiert und mit der entsprechenden Menge MAO (Tabelle 4) in einem Stickstoffkolben versetzt. Das Propen wurde bei Raumtemperatur mit einem Gasdruck von 1 bar über ein Gaseinleitungsrohr in das Reaktionsgemisch eingeleitet. Nach der Reaktion wurde das Rohprodukt mit salzsaurem Methanol auf pH 1 gebracht. Nach Trocknung der organischen Phase erhielt man die Polymere als farblose Feststoffe.

In Beispiel 45 würde der Komplex aus Beispiel 2: Dichloro-[1-(8-chinolyl)-2,3,4,5-tetramethylcyclopentadienyl]chrom(III) und in den Beispielen 46 bis 47 der Komplex aus Beispiel 4: Dichloro-[1-(8-chinolyl)indenyl]chrom(III) verwendet. Die Polymerisationsdaten können der Tabelle 4 entnommen werden.

**Tabelle 4:**

| Polymerisationsdaten der Beispiele 45 bis 47 | | | | | |
|---|---|---|---|---|---|
| Bsp. | Menge Kat. [mmol]/[mg] | t [min] | Ausbeute [g] | Aktivität [g PP/mmol Kat. h bar] | Al:Cr |
| 45 | 0.005/2 | 120 | 1.20 | 111 | 100:1 |
| 46 | 0.0054/2 | 240 | 1.06 | 50 | 1000:1 |
| 47 | 0.016/6 | 90 | 0.36 | 15 | 100:1 |

Das Polypropylen aus Beispiel 47 ist wie folgt charakterisiert:

M_{w} : 82024; Mₙ: 7197; M_{w}/Mₙ: 11.4; Viskosität η: 0.53.

### Beispiel 48.

### Polymerisation von 1-Hexen

Der Komplex aus Beispiel 4: Dichloro-[1-(8-chinolyl)indenyl]chrom(III) (2 mg, 5.4 µmol) wurde mit 10 ml 1-Hexen suspendiert und mit 5.4 mmol Methylaluminoxan (1.6 M in Toluol) in einem 50 ml Stickstoffkolben versetzt und 24 Stunden bei Raumtemperatur gerührt. Nach Beendigung der Polymerisation wurde das Reaktionsgemisch mit salzsaurem Methanol auf pH 1 eingestellt und die organische Phase im Vakuum getrocknet. Der Komplex ist in der Lage Hexen zu polymerisieren.

### Beispiel 49 und 50

### Polymerisation von Ethen in Anwesenheit von H₂

Die Polymerisationen wurden analog den Beispielen 19 bis 40 durchgeführt. Zusätzlich wurde H₂ bei Atmosphärendruck mit ca. 10 l/h durchgeleitet. In Beispiel 49 wurde Ethen in Anwesenheit von dem Komplex aus Beispiel 2 (5,2 mg) und Methylalumoxan (Al:Cr = 350:1) bei 40°C für 25 min polymerisiert. Es konnten 7g PE erhalten werden. Dies entspricht einer Aktivität von 1200 g PE/mmolCr·h. Das Polymer besaß eine Dichte von 0,9426 g/cm³ und eine Viskosität von 5,51 dl/g.

In Beispiel 50 wurde der Komplex aus Beispiel 4 (6 mg) mit Methylaluminoxan (Al:Cr = 500:1) bei 40°C verwendet. Nach 15 min Polymerisationszeit konnten 1,2 g PE isoliert werden. Dies entspricht einer Aktivität von 350 g PE/mmolCr·h. Das Polymer besaß eine Dichte von 0,9296 g/cm³ und eine Viskosität von 17,9 dl/g.

### Beispiel 51 (Vergleichsversuch)

Dichloro-[(2-Dicyclohexylphosphinoethyl)cyclopentadienyl]chrom wurde entsprechend DE 197 106 15 dargestellt. 3,1 mg dieses Komplexes wurden analog der Beispiele 62 und 63 mit Methylaluminoxan(Al:Cr = 350:1) bei 40°C mit einem Ethen/H₂ Gemisch kontaktiert. Es konnte keine Polymerisation beobachtet werden (der Komplex war ohne H₂ polymerisationsaktiv mit einer Aktivität von 125 g PE/mmol/Cr·h unter ansonsten gleichen Bedingungen.

### Beispiele 52-68: Trägerung auf Kieselgel

Als Kieselgel wurde ES70X der Firma Crossfield verwendet.

### Beispiel 52

Zu 233 mg Dichloro-[1-8-chinolyl)-2,3,4,5-tetramethylcyclopentadienyl]chrom(III)·LiCl teilweise gelöst in 40 ml Toluol wurden 18,8 ml MAO (30 Gew.-% in Toluol) (50 mmol) gegeben und 15 Minuten bei Raumtemperatur gerührt. Dann wurden 8,2 g Kieselgel (130°C calciniert) zum Reaktionsgemisch zugegeben und die so erhaltene Suspension 3 Stunden bei Raumtemperatur gerührt. Dann wurde der Feststoff abfiltriert und anschließend zweimal mit Heptan gewaschen. Der so isolierte Feststoff wurde im Vakuum getrocknet.

Ausbeute 17,5 g geträgerter Katalysator. Die Beladung beträgt 70 µmol pro g Träger, mit Al:Cr der Einsatzstoffe von 150:1.

### Beispiel 53

Die Trägerung aus Beispiel 52 wurde mit 2,21 g des Kieselgels, 68,1 Dichloro-[1-(8-chinolyl)indenyl]chrom·KCl, 5 g MAO (30 Gew.-% in Toluol) und 10 ml Toluol durchgeführt. Man erhielt 4,8 g geträgerten Katalysator mit einer Beladung von 70 µmol Cr pro g Träger (Al:Cr = 150:1).

### Beispiel 54

80,2 mg Dichloro-[1-(8-chinolyl)indenyl]chrom·KCl wurde n 4,8 ml MAO (30 Gew.-% in Toluol) (Cr:Al = 1:120) und 0,3 ml Toluol gelöst. Nach 15 min Rühren wurde die Lösung langsam unter Rühren zu 2,6 g des Kieselgels getropft. Nach einer Stunde Rühren wurde das Lösungsmittel im Vakuum entfernt. Man erhielt 4,7 g des geträgerten Katalysators mit einer Beladung von 70 µmol Cr pro g Träger.

### Beispiel 55

In eine Rührapparatur wurden 5,3 g des Kieselgels (6 h/130°C/Vakuum) eingefüllt.

In einem Kolben wurden nacheinander 140,1 mg Dichloro-[1-(8-chinolyl)indenyl]chrom·KCl (318 mmol ≙ 60 µmol Cr pro g Träger) und 85,7 mg Bis(n-Butylcyclopentadienyl)zirkondichlorid (212 mmol ≙ 40 µmol Cr pro g Träger) eingewogen. Dazu wurden 63,6 mmol MAO (13,4 ml 4,75 M in Toluol = 30 Gew.-%) gegeben und 30 Minuten bei Raumtemperatur gerührt (Al:Cr = 120:1)

Diese Lösung wurde nun in ca. 10 Min. gleichmäßig unter langsamen Rühren über den Tropftrichter zum Träger eindosiert. Mittels eines Teflonschlauches wurde die Lsg. dabei direkt auf den Träger getropft. Es wurde 1 h bei Raumtemperatur nachgerührt und anschließend weitere 2 h bei Raumtemperatur stehen gelassen.

Dann wurde unter Vakuum das Lösungsmittel entfernt. Man erhielt 9,2 g des geträgerten Katalysators

### Beispiele 56-68

Die Polymerisationen wurden in einem 101-Rührautoklaven durchgeführt. Unter Stickstoff wurde bei Raumtemperatur Putzalkyl gemäß Tabelle 5 in den Autoklaven gegeben, dann wurden 4 l Isobutan einkondensiert. Danach wurde unter Rühren auf 70°C erwärmt und anschließend die in Tabelle 5 angegebene Einwaage des geträgerten Katalysators mit einem Ethylenüberdruck eingepresst. Dann wurde der Reaktordruck mit Ethylen auf einen Enddruck von 40 bar erhöht und die Polymerisation 60 Minuten weitergeführt (mit Ausnahme von Beispiel 60, das 90 min weitergeführt wurde).

Die Reaktion wurde durch Entspannen des Reaktors beendet und die Produkte ausgetragen. In der Tabelle 5 sind die Polymerisations- bzw. Produktdaten zusammengefasst.

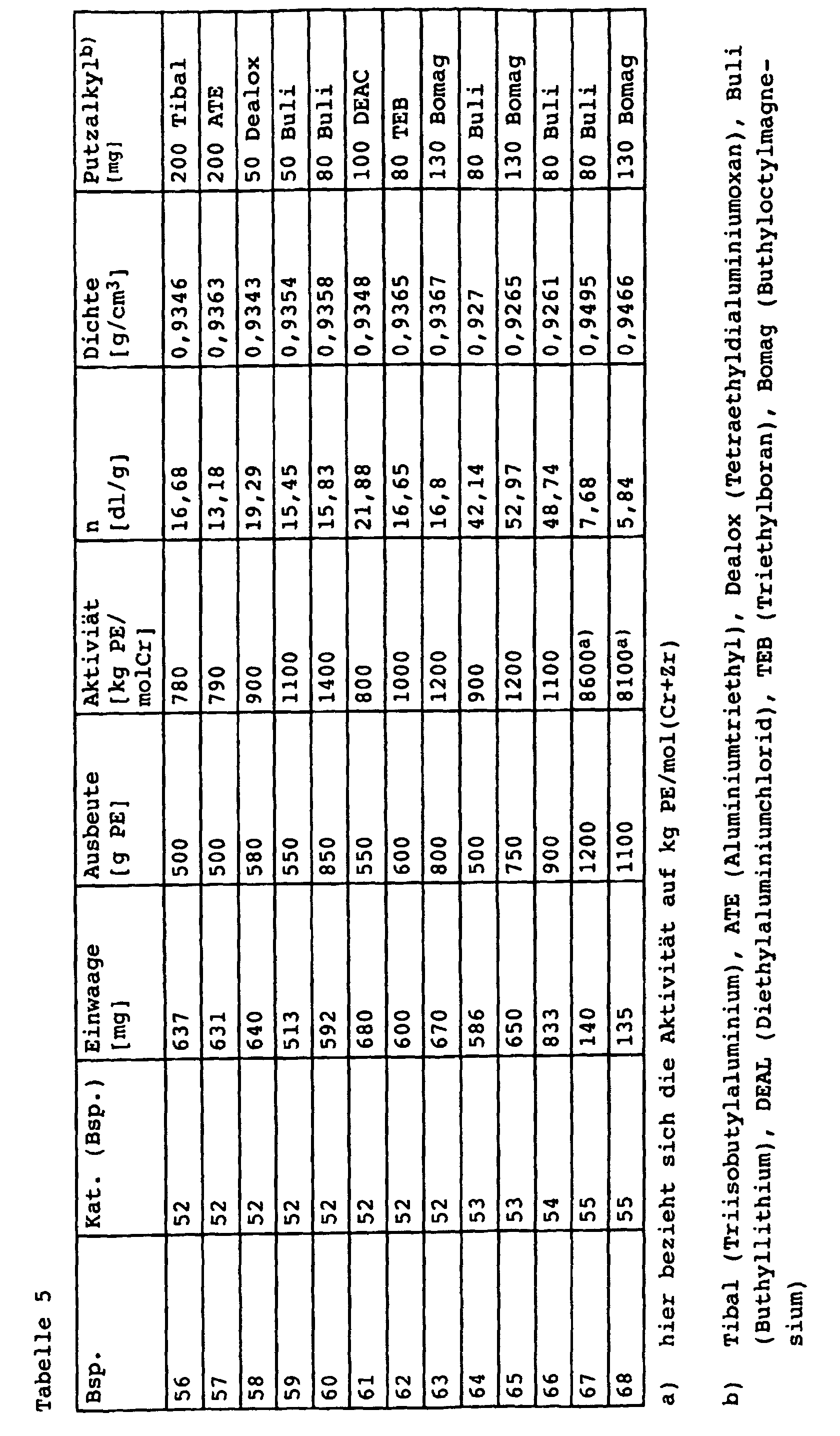

### Beispiel 69

4,2 mg Dichloro-[1-(8-chinolyl)idenyl]chrom (11,5 µmol) und 7,1 mg [1,3,5-Tri 5/2-Ethylhexyl)-1,3,5-triazacyclohexan]chromtrichlorid (darstellbar analog zu Köhn et. al, Angew. Chem. Int. d. Engl. 1994, 33, Seite 1877-1878) wurden in 250 ml Toluol gelöst. Es wurde auf 40°C erwärmt und 3,4 ml MAO (15,4 mmol; 4,75 M in Toluol) zugegeben (Al:Cr = 650:1).

In diese Lösung wurde bei 40°C ein Ethylenstrom durchgeleitet. Nach 15 Min wurde die Polymerisation abgebrochen. Man erhielt 10,4 g Polymer und 2,97 g einer C₆ bis >C₂₀ flüssigen Fraktion. Das Polymer hatten eine Dichte von 0,9212 g/cm³ und eine Viskosität von 10,8 dl/g.

## Patentansprüche

1. Substituierte Monocyclopentadienyl-, Monoindenyl-, Monofluorenyl- oder Heterocyclopentadienylkomplexe von Chrom, Molybdän oder Wolfram, der allgemeinen Formel I 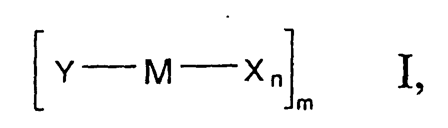 worin die Variablen folgende Bedeutung besitzen:
M Chrom, Molybdän oder Wolfram
Y durch folgende allgemeine Formel II 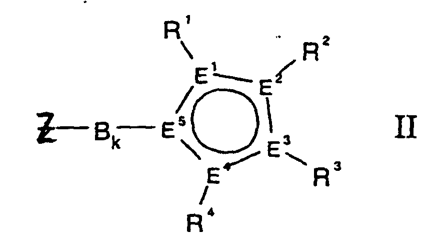 beschrieben ist, worin die Variablen folgende Bedeutung besitzen:
E¹-E⁵ Kohlenstoff oder maximal ein E¹ bis E⁵ Phosphor oder Stickstoff,
Z 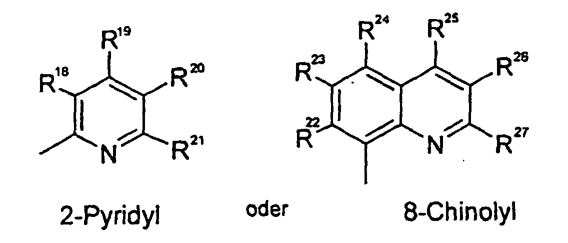
B eine der folgenden Gruppen: 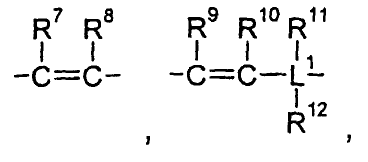 und zusätzlich, falls Z ein unsubstituiertes, substituiertes oder kondensiertes, partiell ungesättigtes heterocyclisches oder heteroaromatisches Ringsystem ist, auch 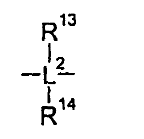 sein kann, wobei
L¹,L² Silizium oder Kohlenstoff bedeutet,
k 1, wenn Z ein unsubstituiertes, substituiertes oder kondensiertes, partiell ungesättigtes heterocyclisches oder heteroaromatisches Ringsystem ist auch 0,
X unabhängig voneinander Fluor, Chlor, Brom, Jod, Wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR¹⁵R¹⁶, OR¹⁵, SR¹⁵, SO₃R¹⁵, OC(O)R¹⁵, CN, SCN, β-Diketonat, CO, BF₄-, PF₆-, oder sperrige nichtkoordinierende Anionen,
R¹-R¹⁶ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR¹⁷₃, wobei die organischen Reste R¹-R¹⁶ auch durch Halogene substituiert sein können und je zwei geminale oder vicinale Reste R¹-R¹⁶ auch zu einem fünf- oder sechsgliedrigen Ring verbunden sein können,
R¹⁷ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei geminale Reste R¹⁷ auch zu einem fünf- oder sechsgliedrigen Ring verbunden sein können,
R¹⁸-R²⁷ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR¹⁷₃, Halogen, wobei die organischen Reste R¹⁸-R²⁷ auch durch Halogene substituiert sein können und je zwei vicinale Reste R¹⁸-R²⁷ auch zu einem fünf- oder sechsgliedrigen Ring verbunden sein können,
n 1, 2 oder 3,
m 1, 2 oder 3.

2. Substituierte Monocyclopentadienyl-, Monoindenyl-, Monofluorenyl- oder Heterocyclopentadienylkomplexe von Chrom, Molybdän oder Wolfram nach Anspruch 1, worin B gleich CH₂, C(CH₃)₂ oder Si(CH₃)₂ ist.

3. Substituierte Monocyclopentadienyl-, Monoindenyl-, Monofluorenyl- oder Heterocyclopentadienylkomplexe von Chrom nach den Ansprüchen 1 bis 2.

4. Substituierte Monocyclopentadienyl-, Monoindenyl-, Monofluorenyl- oder Heterocyclopentadienylkomplexe nach den Ansprüchen 1 bis 3, worin E¹E²E³E⁴E⁵R¹R²R³R⁴ ein unsubstituiertes oder substituiertes Indenyl ist.

5. Substituierte Monocyclopentadienyl-, Monoindenyl-, Monofluorenyl- oder Heterocyclopentadienylkomplexe nach Anspruch 4, worin E¹E²E³E⁴E⁵R¹R² ein Indenyl ist.

6. Verfahren zur Polymerisation oder Copolymerisation von Olefinen, **dadurch gekennzeichnet, dass** man Olefine in Anwesenheit von folgenden Komponenten polymerisiert:
(A) Substituierte Monocyclopentadienyl-, Monoindenyl-, Monofluorenyl- oder Heterocyclopentadienylkomplexe von Chrom, Molybdän oder Wolfram nach Anspruch 1,
(B) optional einer oder mehreren Aktivatorverbindungen, und
(C) optional einem oder mehreren für die Polymerisation von Olefinen üblichen Katalysatoren.

7. Verfahren nach Anspruch 6, worin man als Aktivatorverbindung (B) eine Verbindung ausgewählt aus der Gruppe Aluminoxan, Dimethylaniliniumtetrakispentafluorophenylborat, Trityltetrakispentafluorophenylborat oder Trispentafluorophenylboran verwendet.

8. Verfahren nach den Ansprüchen 6 oder 7, worin mindestens ein Olefin ausgewählt aus der Gruppe Ethen, Propen, 1-Buten, 1-Penten, 1-Hexen, 1-Hepten, 1-Octen oder 1-Decen polymerisiert wird.

9. Verfahren nach den Ansprüchen 6 bis 8, worin die Polymerisation in Suspension, in Lösung oder in der Gasphase erfolgt.

## Claims

1. A substituted monocyclopentadienyl, monoindenyl, monofluorenyl or heterocyclopentadienyl complex of chromium, molybdenum or tungsten, of the formula I 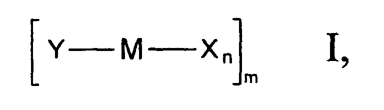 where:
M is chromium, molybdenum or tungsten
Y is described by the formula II 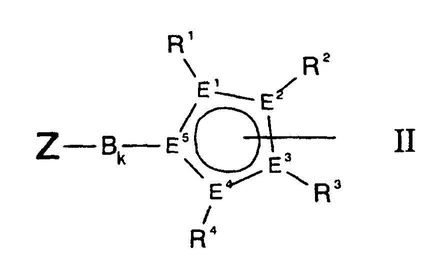 where:
E¹-E⁵ are carbon or a maximum of one E¹ to E⁵ is phosphorus or nitrogen,
Z is 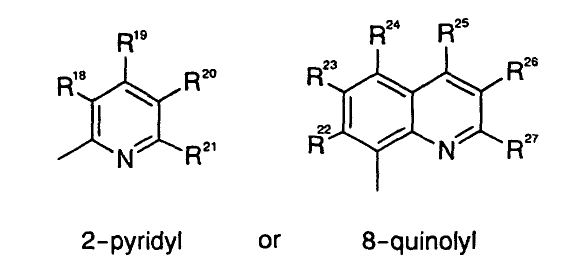
B is one of the following groups: 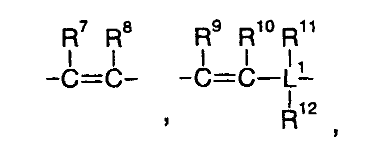 and in addition, if Z is an unsubstituted, substituted or fused, partially unsaturated heterocyclic or heteroaromatic ring system, may alternatively be 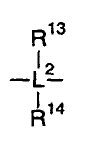 where
L¹ and L² are silicon or carbon,
k is 1, and is alternatively 0 if Z is an unsubstituted, substituted or fused, partially unsaturated heterocyclic or heteroaromatic ring system,
X independently of one another, are fluorine, chlorine, bromine, iodine, hydrogen, C₁-C₁₀-alkyl, C₂-C₁₀-alkenyl, C₆-C₂₀-aryl, alkylaryl having 1-10 carbon atoms in the alkyl radical and 6-20 carbon atoms in the aryl radical, NR¹⁵R¹⁶, OR¹⁵, SR¹⁵, SO₃R¹⁵, OC(O)R¹⁵, CN, SCN, β-diketonate, CO, BF₄-, PF₆-, or a bulky, non-coordinating anion,
R¹-R¹⁶ independently of one another, are hydrogen, C₁-C₂₀-alkyl, C₂-C₂₀-alkenyl, C₆-C₂₀-aryl, alkylaryl having 1 to 10 carbon atoms in the alkyl radical and 6-20 carbon atoms in the aryl radical, or SiR¹⁷₃, where the organic radicals R¹-R¹⁶ may also be substituted by halogens, and in each case two geminal or vicinal radicals R¹-R¹⁶ may also be linked to form a five- or six-membered ring,
R¹⁷ independently of one another, are hydrogen, C₁-C₂₀-alkyl, C₂-C₂₀-alkenyl, C₆-C₂₀-aryl, alkylaryl having 1 to 10 carbon atoms in the alkyl radical and 6-20 carbon atoms in the aryl radical, and in each case two geminal radicals R¹⁷ may also be linked to form a five- or six-membered ring,
R¹⁸-R²⁷ independently of one another, are hydrogen, C₁-C₂₀-alkyl, C₂-C₂₀-alkenyl, C₆-C₂₀-aryl, alkylaryl having 1 to 10 carbon atoms in the alkyl radical and 6-20 carbon atoms in the aryl radical, SiR¹⁷₃, or halogen, where the organic radicals R¹⁸-R²⁷ may also be substituted by halogens, and in each case two vicinal radicals R¹⁸-R²⁷ may also be linked to form a five- or six-membered ring,
n is 1, 2 or 3, and
m is 1, 2 or 3.

2. A substituted monocyclopentadienyl, monoindenyl, monofluorenyl or heterocyclopentadienyl complex of chromium, molybdenum or tungsten as claimed in claim 1, in which B is CH₂, C(CH₃)₂ or Si(CH₃)₂.

3. A substituted monocyclopentadienyl, monoindenyl, monofluorenyl or heterocyclopentadienyl complex of chromium as claimed in claim 1 or 2.

4. A substituted monocyclopentadienyl, monoindenyl, monofluorenyl or heterocyclopentadienyl complex as claimed in claims 1 to 3, in which E¹E²E³E⁴E⁵ R¹R²R³R⁴ is unsubstituted or substituted indenyl.

5. A substituted monocyclopentadienyl, monoindenyl, monofluorenyl or heterocyclopentadienyl complex as claimed in claim 4, in which E¹E²E³E⁴E⁵ R¹R² is indenyl.

6. A process for the polymerization or copolymerization of olefins, **characterized in that** olefins are polymerized in the presence of the following components:
(A) A substituted monocyclopentadienyl, monoindenyl, monofluorenyl or heterocyclopentadienyl complex of chromium, molybdenum or tungsten as claimed in claim 1,
(B) if desired, one or more activator compounds, and
(C) if desired, one or more conventional olefin-polymerization catalysts.

7. A process as claimed in claim 6, in which the activator compound (B) is a compound selected from the group consisting of aluminoxane, dimethylanilinium tetrakispentafluorophenylborate, trityl tetrakispentafluorophenylborate or trispentafluorophenylborane.

8. A process as claimed in claim 6 or 7, in which at least one olefin selected from the group consisting of ethene, propene, 1-butene, 1-pentene, 1-hexene, 1-heptene, 1-octene and 1-decene is polymerized.

9. A process as claimed in claims 6 to 8, in which the polymerization is carried out in suspension, in solution or in the gas phase.

## Revendications

1. Complexes monocyclopentadiényliques, monoindényliques, monofluorényliques ou hétérocyclopentadiényliques substitués de chrome, de molybdène ou de tungstène, répondant à la formule générale I 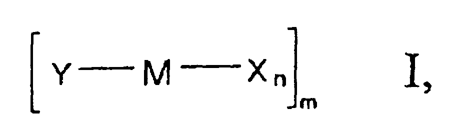 dans laquelle les variables ont les significations suivantes :
M représente un atome de chrome, de molybdène ou de tungstène
Y répond à la formule générale II suivante 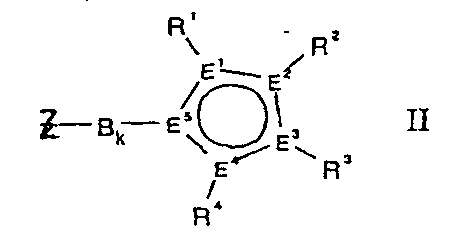 dans laquelle les variables ont les significations suivantes :
E¹-E⁵ représentent un atome de carbone ou au maximum un atome d'azote ou de phosphore E¹ à E⁵
Z représente 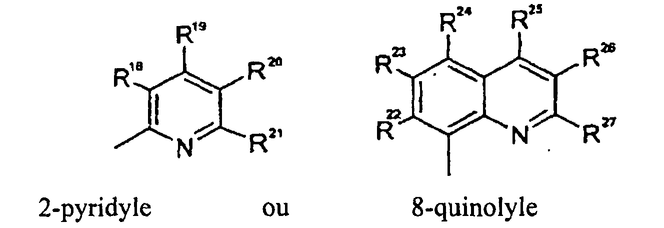
B représente un des groupes suivants :
et, de plus, dans le cas où Z représente un système cyclique hétérocyclique ou hétéroaromatique partiellement insaturé non substitué, substitué ou condensé, B peut également représenter le groupe suivant : 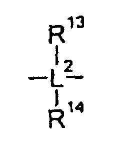 dans lesquels
L¹, L² représentent un atome de silicium ou de carbone,
k vaut 1, ou dans le cas où Z représente un système cyclique hétérocyclique ou hétéroaromatique partiellement insaturé non substitué, substitué ou condensé, k vaut également 0,
x représente indépendamment un atome de fluor, de chlore, de brome, d'iode, d'hydrogène, un groupe alkyle en C¹ à C¹⁰, alcényle en C² à C¹⁰, aryle en C⁶ à C²⁰, alkylaryle comprenant de 1 à 10 atomes de carbone dans le reste alkyle et de 6 à 20 atomes de carbone dans le reste aryle, NR¹⁵R¹⁶, OR¹⁵, SR¹⁵, SO₃R¹⁵, OC(O)R¹⁵, CN, SCN, β-dicétonate, CO, les anions BF₄, PF₆ ou des anions non coordinants volumineux,
R¹-R¹⁶ représentent indépendamment un atome d'hydrogène, un groupe alkyle en C¹ à C²⁰, alcényle en C² à C²⁰, aryle en C⁶ à C²⁰, alkylaryle comprenant de 1 à 10 atomes de carbone dans le reste alkyle et de 6 à 20 atomes de carbone dans le reste aryle, SiR¹⁷₃, les restes R¹-R¹⁶ organiques pouvant également être substitués par des halogènes et, à chaque fois, deux restes R¹-R¹⁶ géminaux ou vicinaux pouvant être liés à un cycle à cinq ou six chaînons,
R¹⁷ représente indépendamment un atome d'hydrogène, un groupe alkyle en C¹ à C²⁰, alcényle en C² à C²⁰, aryle en C⁶ à C²⁰, alkylaryle comprenant de 1 à 10 atomes de carbone dans le reste alkyle et de 6 à 20 atomes de carbone dans le reste aryle, et, à chaque fois, deux restes R¹⁷ géminaux peuvent être liés à un cycle à cinq ou six chaînons,
R¹⁸-R²⁷ représentent indépendamment un atome d'hydrogène, un groupe alkyle en C¹ à C²⁰, alcényle en C² à C²⁰, aryle en C⁶ à C²⁰, alkylaryle comprenant de 1 à 10 atomes de carbone dans le reste alkyle et de 6 à 20 atomes de carbone dans le reste aryle, SiR¹⁷₃, un atome d'halogène, les restes R¹⁸-R²⁷ organiques pouvant également être substitués par des halogènes et, à chaque fois, deux restes R¹⁸-R²⁷ vicinaux pouvant être liés à un cycle à cinq ou six chaînons,
n vaut 1, 2 ou 3,
m vaut 1, 2 ou 3.

2. Complexes monocyclopentadiényliques, monoindényliques, monofluorényliques ou hétérocyclopentadiényliques substitués de chrome, de molybdène ou de tungstène selon la revendication 1, dans lesquels B correspond à CH₂, C(CH₃)₂ ou Si(CH₃)₂.

3. Complexes monocyclopentadiényliques, monoindényliques, monofluorényliques ou hétérocyclopentadiényliques substitués de chrome selon les revendications 1 à 2.

4. Complexes monocyclopentadiényliques, monoindényliques, monofluorényliques ou hétérocyclopentadiényliques substitués selon les revendications 1 à 3, dans lesquels E¹E²E³E⁴E⁵R¹R²R³R⁴ représente un groupe indényle substitué ou non substitué.

5. Complexes monocyclopentadiényliques, monoindényliques, monofluorényliques ou hétérocyclopentadiényliques substitués selon la revendication 4, dans lesquels E¹E²E³E⁴E⁵R¹R² représente un groupe indényle.

6. Procédé de polymérisation ou de copolymérisation d'oléfines, **caractérisé en ce qu'**on polymérise des oléfines en présence des composants suivants :
(A) complexes monocyclopentadiényliques, monoindényliques, monofluorényliques ou hétérocyclopentadiényliques substitués de chrome, de molybdène ou de tungstène selon la revendication 1,
(B) éventuellement un ou plusieurs composés activateurs, et
(C) éventuellement un ou plusieurs catalyseurs couramment utilisés dans la polymérisation des oléfines.

7. Procédé selon la revendication 6, dans lequel on emploie, à titre de composé activateur (B), un composé choisi parmi le groupe constitué de l'aluminoxane, du tétrakis(pentafluorophényl)borate de diméthylanilinium, du tétrakis(pentafluorophényl)borate de trityle ou du trispentafluorophénylborane.

8. Procédé selon les revendications 6 ou 7, dans lequel on polymérise au moins une oléfine choisie parmi le groupe constitué de l'éthylène, du propène, du 1-butène, du 1-pentène, du 1-hexène, du 1-heptène, du 1-octène ou du 1-décène.

9. Procédé selon les revendications 6 à 8, dans lequel la polymérisation est conduite en suspension, en solution ou en phase gazeuse.
